# EUROPEAN PATENT SPECIFICATION

(11) **EP 3 955 401 B1**
(45) Date of publication and mention of the grant of the patent: **11.11.2026**
(21) Application number: 20190733.4
(22) Date of filing: 12.08.2020
(51) Int. Cl.: H02B 11/133

(54) **LOW, MEDIUM OR HIGH VOLTAGE SWITCHGEAR COMPRISING AN INTERLOCK SYSTEM**
NIEDER-, MITTEL- ODER HOCHSPANNUNGSSCHALTGERÄT UMFASSEND EIN VERRIEGELUNGSSYSTEM
APPAREILLAGE DE COMMUTATION BASSE TENSION, MOYENNE TENSION OU HAUTE TENSION COMPRENANT UN SYSTÈME DE VERROUILLAGE

(43) Date of publication of application: 16.02.2022
(73) Proprietor: ABB Schweiz AG, 5400 Baden (CH)
(72) Inventor: SKUCI, Michal, 91311 Trencianske Stankovce (SK); CERNOHOUS, Josef, 561 65 Jamne nad Orlici (CZ)
(74) Representative: Maiwald GmbH

(56) References cited:
- EP-A1- 2 230 734
- EP-A1- 3 016 223
- BE-A- 535 860
- KR-B1- 100 957 493

## Description

### FIELD OF THE INVENTION

The present invention relates to a low, medium or high voltage switchgear with an interlock system.

### BACKGROUND OF THE INVENTION

The operation of low, medium and high voltage switchgear has to follow certain rules so that the safety of both the device and the operator is secured. This often involves the use of interlocks.

Interlocks can operate in mechanical, an electrical or in a combined mechanical and electrical way. Mechanical interlocks are often preferred, because they work without the need of electrical power and their status can easily be overviewed by an operator. However, there is the possibility for interlocks to be overridden, either through the use of excessive force being used by the operator or through the operator intentionally seeking to override the interlock.

EP2230734A1 describes that an electric switchgear comprises a casing having at least one compartment provided with a door, a plurality of electrical conductors suitable to be connected to a load, a multi-phase switching device which is mounted on a truck, said truck being movable inside said compartment between a connected position wherein each phase of said switching device is electrically connected to a corresponding electrical conductor and a withdrawn position wherein each phase of said switching device is electrically separated from the corresponding electrical conductor, and a mechanism adapted for stopping said switching device in a position intermediate between said connected position and said withdrawn position.

BE535860A describes that the rotary operating handle, passing through the door of the opening compartment, comprises a fork link with the movable frame, which link is associated with a helical ramp device, such that the rotation of this handle in the direction of the opening causes, initially, by this ramp, the translation of said movable frame gripped by the fork, the latter coming into engagement with this frame at the beginning of the rotational movement of the handle to release it at the end of said movement, the action of the handle on the bolt of the lock taking place at the end of this movement of rotation of the handle.

EP3016223A1 describes a door interlock device for a vacuum circuit breaker, which is operable in cooperation with an operation of a cradle shutter. It is described that the door interlock device for a vacuum circuit breaker includes a pressing unit that is provided on one end portion of a shutter lever driving a terminal shutter of a cradle, a driving force transfer unit that is rotatably or slidably installed on a cradle side frame, the driving force transfer unit performing a rotary motion or a sliding motion by a force applied from the pressing unit, and a sliding member that is configured to lock or unlock a door lock plate in response to a driving force transferred from the driving force transfer unit.

KR100957493 describes a case door of a vacuum circuit breaker. It is described that a first shutter blade and a second shutter blade are formed in a vacuum interrupter case. It is described that the first shutter blade and the second shutter blade respectively open and close a first plug and second plugs. It is described that a first switching part interlinks the first shutter blade and opens and closes the first plug. It is described that a second switching part opens and closes a second plug. It is described that a locking part controls the lock and release of the case. It is described that a shutter cam guides the rotation of first and second opening and closing parts.

There is a need to provide low, medium and high voltage switchgear with improved interlock systems.

### SUMMARY OF THE INVENTION

Therefore, it would be advantageous to have improved low, medium or high voltage switchgear interlock technology.

The invention and its scope of protection is defined by the appended independent claim. Embodiments of the invention are defined by the appended dependent claims.

The following aspects and examples of the disclosure provide examples of combinations of technical subject matters.

In a first aspect, there is provided an interlock system for a low, medium or high voltage switchgear, the switchgear comprising:
- a compartment;
- a door;
- a door handle; and
- a circuit breaker;
   wherein, the door permits access to the inside of the compartment;
   wherein the door handle is used to open and close the door;
   wherein the circuit breaker is located in the compartment;
      wherein the door handle is configured to move from a closed position to an open position; and
   wherein the interlock system is configured such that:
      when the door handle is in the closed position the door is configured not to open and when the door handle is in the open position the door is configured to open; and
      wherein a movement of the door handle from the closed position to the open position is configured to place the circuit breaker in a locked configuration, and wherein in the locked configuration the circuit breaker cannot be operated.

In a second aspect, there is provided low, medium or high voltage switchgear, comprising:
- a compartment;
- a door;
- a door handle; and
- a circuit breaker.

The door permits access to the inside of the compartment. The door handle is used to open and close the door. The circuit breaker is located in the compartment. The door handle is configured to move from a closed position to an open position. A movement of the door handle from the closed position to the open position is configured to place the circuit breaker in a locked configuration. In the locked configuration the circuit breaker cannot be operated. When the door handle is in the closed position the door is configured not to open and when the door handle is in the open position the door is configured to open.

In an example, a movement of the door handle from the open position to the closed position is configured to place the circuit breaker in an unlocked configuration, and wherein in the unlocked configuration the circuit breaker can be operated.

In an example, when the door handle is in the closed position a movement of the circuit breaker from a racked out configuration to a racked in configuration is configured to place the door handle in a locked configuration where it is locked from moving from the closed position to the open position.

In an example, when the door handle is in the closed position a movement of the circuit breaker from the racked in configuration to the racked out configuration is configured to place the door handle in an unlocked configuration where it is not locked from moving from the closed position to the open position.

In an example, the switchgear comprises an earthing switch and an earthing switch operation handle or bar. When the earthing switch operation handle or bar is inserted the earthing switch is configured to not operate and when the earthing switch operation handle or bar is not inserted the earthing switch is configured to operate. A movement of the circuit breaker from a racked in configuration to a racked out configuration is configured to de-activate a lock, and de-activation of the lock is configured to enable the earthing switch operation handle or bar to be inserted.

In an example, insertion of the earthing switch operation handle or bar is configured to place the circuit breaker in the locked configuration.

In an example, a movement of the circuit breaker from the racked out configuration to the racked in configuration is configured to activate the lock, and activation of the lock is configured to stop the earthing switch operation handle or bar from being inserted.

In an example, the movement of the circuit breaker from the racked out configuration to the racked in configuration is configured to place the circuit breaker in an unlocked configuration. In the unlocked configuration the circuit breaker can be operated.

In an example, the switchgear comprises: a second compartment; a second door; and a second door handle. The second door permits access to the inside of the second compartment. The second door handle is used to open and close the second door. The second door handle is configured to move from a closed position to an open position. The earthing switch is configured to be transitioned to an on state through utilization of the earthing switch operation handle or bar and the earthing switch is configured to be transitioned to an off state through utilization of the earthing switch operation handle or bar. When the second door handle is in the closed position the second door is configured not to open and when the second door handle is in the open position the second door is configured to open. When the second door handle is in the closed position a transition of the earthing switch from the on state to the off state is configured to place the second door handle in a locked configuration where it is locked from moving from the closed position to the open position.

In a third aspect, there is provided an interlock system for a low, medium or high voltage switchgear, the switchgear comprising:
- a compartment;
- a door;
- a door handle; and
- a circuit breaker;
   wherein, the door permits access to the inside of the compartment;
   wherein the door handle is used to open and close the door;
   wherein the circuit breaker is located in the compartment;
   wherein the door handle is configured to move from a closed position to an open position; and
   wherein the interlock system is configured such that:
      when the door handle is in the closed position the door is configured not to open and when the door handle is in the open position the door is configured to open; and
      wherein when the door handle is in the closed position a movement of the circuit breaker from a racked out configuration to a racked in configuration is configured to place the door handle in a locked configuration where it is locked from moving from the closed position to the open position.

In a fourth aspect, there is provided a low, medium or high voltage switchgear, comprising:
- a compartment;
- a door;
- a door handle; and
- a circuit breaker.

The door permits access to the inside of the compartment. Te door handle is used to open and close the door. The circuit breaker is located in the compartment. The door handle is configured to move from a closed position to an open position. When the door handle is in the closed position a movement of the circuit breaker from a racked out configuration to a racked in configuration is configured to place the door handle in a locked configuration where it is locked from moving from the closed position to the open position. When the door handle is in the closed position the door is configured not to open and when the door handle is in the open position the door is configured to open.

In an example, when the door handle is in the closed position a movement of the circuit breaker from the racked in configuration to the racked out configuration is configured to place the door handle in an unlocked configuration where it is not locked from moving from the closed position to the open position.

In an example, a movement of the door handle from the closed position to the open position is configured to place the circuit breaker in a locked configuration, and in the locked configuration the circuit breaker cannot be operated.

In an example, a movement of the door handle from the open position to the closed position is configured to place the circuit breaker in an unlocked configuration, and in the unlocked configuration the circuit breaker can be operated.

In an example, the switchgear comprises an earthing switch and an earthing switch operation handle or bar. When the earthing switch operation handle or bar is inserted the earthing switch is configured to not operate and when the earthing switch operation handle or bar is not inserted the earthing switch is configured to operate. A movement of the circuit breaker from a racked in configuration to a racked out configuration is configured to de-activate a lock, and de-activation of the lock is configured to enable the earthing switch operation handle or bar to be inserted.

In an example, insertion of the earthing switch operation handle or bar is configured to place the circuit breaker in a locked configuration, and in the locked configuration the circuit breaker cannot be operated.

In an example, a movement of the circuit breaker from the racked out configuration to the racked in configuration is configured to activate the lock, and activation of the lock is configured to stop the earthing switch operation handle or bar from being inserted.

In an example, the movement of the circuit breaker from the racked out configuration to the racked in configuration is configured to place the circuit breaker in an unlocked configuration. In the unlocked configuration the circuit breaker can be operated.

In an example, the switchgear comprises: a second compartment; a second door; and a second door handle. The second door permits access to the inside of the second compartment. The second door handle is used to open and close the second door. The second door handle is configured to move from a closed position to an open position. The earthing switch is configured to be transitioned to an on state through utilization of the earthing switch operation handle or bar and the earthing switch is configured to be transitioned to an off state through utilization of the earthing switch operation handle or bar. When the second door handle is in the closed position the second door is configured not to open and when the second door handle is in the open position the second door is configured to open. When the second door handle is in the closed position a transition of the earthing switch from the on state to the off state is configured to place the second door handle in a locked configuration where it is locked from moving from the closed position to the open position.

In a fifth aspect, there is provided an interlock system for a low, medium or high voltage switchgear, the switchgear comprising:
- a compartment;
- a circuit breaker;
- an earthing switch; and
- an earthing switch operation handle or bar;
   wherein the circuit breaker is located in the compartment; and
   wherein the interlock system is configured such that:
      when the earthing switch operation handle or bar is inserted the earthing switch is configured not to operate and when the earthing switch operation handle or bar is not inserted the earthing switch is configured to operate;
      wherein a movement of the circuit breaker from a racked in configuration to a racked out configuration is configured to de-activate a lock; and
      wherein de-activation of the lock is configured to enable the earthing switch operation handle or bar to be inserted.

In a sixth aspect, there is provided a low, medium or high voltage switchgear, comprising:
- a compartment;
- a circuit breaker;
- an earthing switch; and
- an earthing switch operation handle or bar.

The circuit breaker is located in the compartment. When the earthing switch operation handle or bar is inserted the earthing switch is configured not to operate and when the earthing switch operation handle or bar is not inserted the earthing switch is configured to operate. A movement of the circuit breaker from a racked in configuration to a racked out configuration is configured to de-activate a lock. De-activation of the lock is configured to enable the earthing switch operation handle or bar to be inserted.

In an example, insertion of the earthing switch operation handle or bar is configured to place the circuit breaker in a locked configuration, and wherein in the locked configuration the circuit breaker cannot be operated.

In an example, a movement of the circuit breaker from the racked out configuration to the racked in configuration is configured to activate the lock, and activation of the lock is configured to stop the earthing switch operation handle or bar from being inserted.

In an example, the movement of the circuit breaker from the racked out configuration to the racked in configuration is configured to place the circuit breaker in an unlocked configuration. In the unlocked configuration the circuit breaker can be operated.

In an example, the switchgear comprises a door and a door handle. The door permits access to the inside of the compartment. The door handle is used to open and close the door. The door handle is configured to move from a closed position to an open position. A movement from the closed position to the open position is configured to place the circuit breaker in a locked configuration. In the locked configuration the circuit breaker cannot be operated. When the door handle is in the closed position the door is configured not to open and when the door handle is in the open position the door is configured to open.

In an example, a movement of the door handle from the open position to the closed position is configured to place the circuit breaker in an unlocked configuration, and in the unlocked configuration the circuit breaker can be operated.

In an example, when the door handle is in the closed position a movement of the circuit breaker from the racked out configuration to the racked in configuration is configured to place the door handle in a locked configuration where it is locked from moving from the closed position to the open position.

In an example, when the door handle is in the closed position a movement of the circuit breaker from the racked in configuration to the racked out configuration is configured to place the door handle in an unlocked configuration where it is not locked from moving from the closed position to the open position.

In a seventh aspect, there is provided an interlock system for a low, medium or high voltage switchgear, the switchgear comprising:
- a compartment;
- a door;
- a door handle;
- an earthing switch; and
- an earthing switch operation handle or bar;
   wherein, the door permits access to the inside of the compartment;
   wherein the door handle is used to open and close the door;
   wherein the door handle is configured to move from a closed position to an open position;
   wherein the earthing switch is configured to be transitioned to an on state through utilization of the earthing switch operation handle or bar and the earthing switch is configured to be transitioned to an off state through utilization of the earthing switch operation handle or bar; and
   wherein the interlock system is configured such that:
      when the door handle is in the closed position the door is configured not to open and when the door handle is in the open position the door is configured to open; and
      wherein when the door handle is in the closed position a transition of the earthing switch from the on state to the off state is configured to place the door handle in a locked configuration where it is locked from moving from the closed position to the open position.

In an eighth aspect, there is provided a low, medium or high voltage switchgear, comprising:
- a compartment;
- a door;
- a door handle;
- an earthing switch; and
- an earthing switch operation handle or bar.

The door permits access to the inside of the compartment. The door handle is used to open and close the door. The door handle is configured to move from a closed position to an open position. The earthing switch is configured to be transitioned to an on state through utilization of the earthing switch operation handle or bar and the earthing switch is configured to be transitioned to an off state through utilization of the earthing switch operation handle or bar. When the door handle is in the closed position the door is configured not to open and when the door handle is in the open position the door is configured to open. When the door handle is in the closed position a transition of the earthing switch from the on state to the off state is configured to place the door handle in a locked configuration where it is locked from moving from the closed position to the open position.

In an example, when the door handle is in the closed position a transition of the earthing switch from the off state to the on state is configured to place the door handle in an unlocked configuration where it is not locked from moving from the closed position to the open position.

In an example, a rotation of the earthing switch operation handle or bar is configured to transition the earthing switch from the on state to the off state. An off-centred bearing or cam of the earthing switch operation handle or bar is configured to convert the rotation of the earthing switch operation handle or bar to a translational movement of a part of a coupling system. The coupling system is configured to engage with the door handle to place the door handle in the locked configuration.

In an example, the switchgear comprises: a second compartment; a second door; a second door handle; and a circuit breaker. The second door permits access to the inside of the second compartment. The second door handle is used to open and close the second door. The circuit breaker is located in the second compartment. The second door handle is configured to move from a closed position to an open position. A movement from the closed position to the open position of the door handle is configured to place the circuit breaker in a locked configuration. In the locked configuration the circuit breaker cannot be operated. When the second door handle is in the closed position the second door is configured not to open and when the second door handle is in the open position the second door is configured to open.

In an example, when the earthing switch operation handle or bar is inserted the earthing switch is configured not to operate and when the earthing switch operation handle or bar is not inserted the earthing switch is configured to operate. A movement of the circuit breaker from a racked in configuration to a racked out configuration is configured to de-activate a lock. De-activation of the lock is configured to enable the earthing switch operation handle or bar to be inserted.

In an example, insertion of the earthing switch operation handle or bar is configured to place the circuit breaker in the locked configuration.

The above aspects and examples will become apparent from and be elucidated with reference to the embodiments described hereinafter.

### BRIEF DESCRIPTION OF THE DRAWINGS

Exemplary embodiments will be described in the following with reference to the following drawing:
Fig. 1 shows an example of a handle that is part of the new interlock system;
Fig. 2 shows an example of a switchgear with an exemplar integrated interlock system;
Fig. 3-8 shows examples of an interlock system associated with a circuit breaker; and
Figs. 9-21 shows example of an interlock system associated with an earthing switch.

### DETAILED DESCRIPTION OF EMBODIMENTS

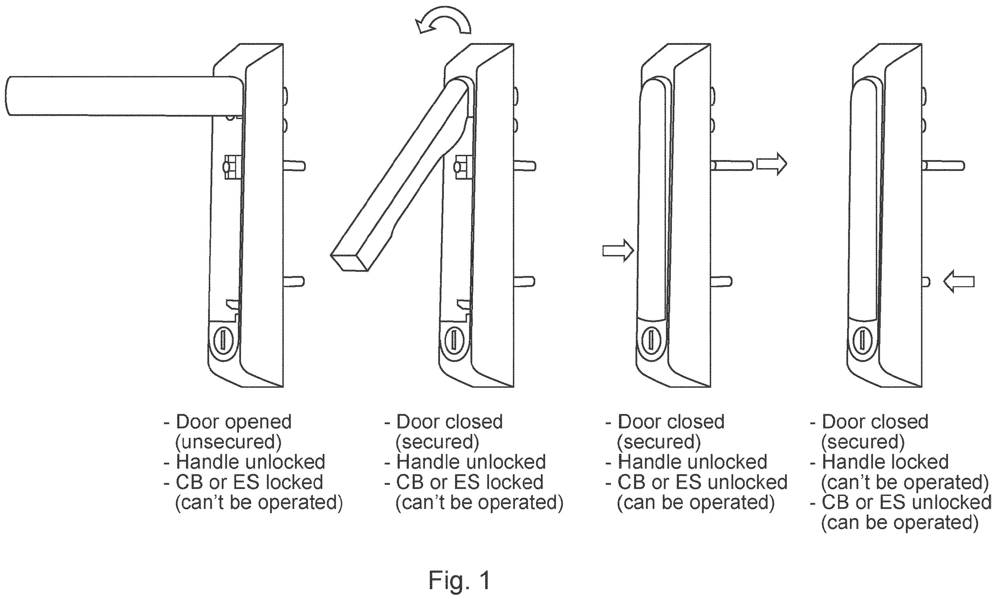

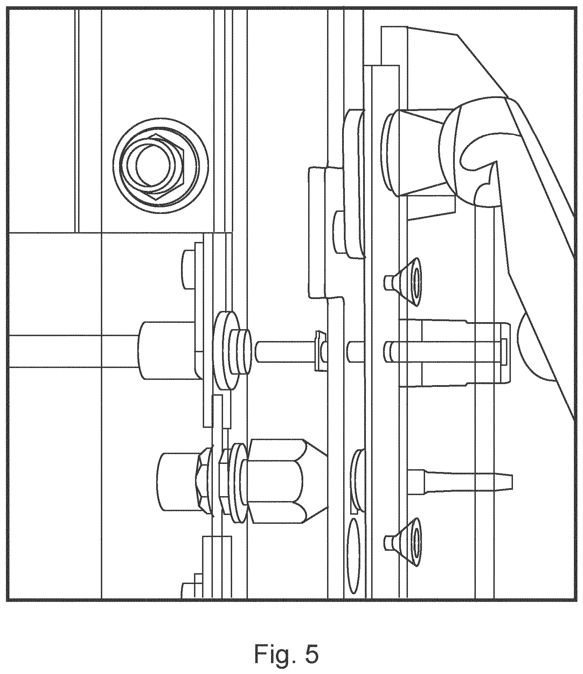

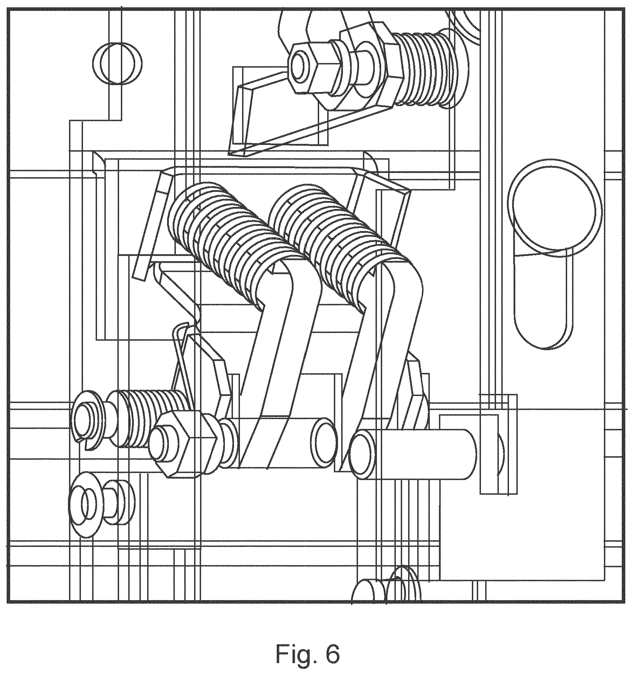

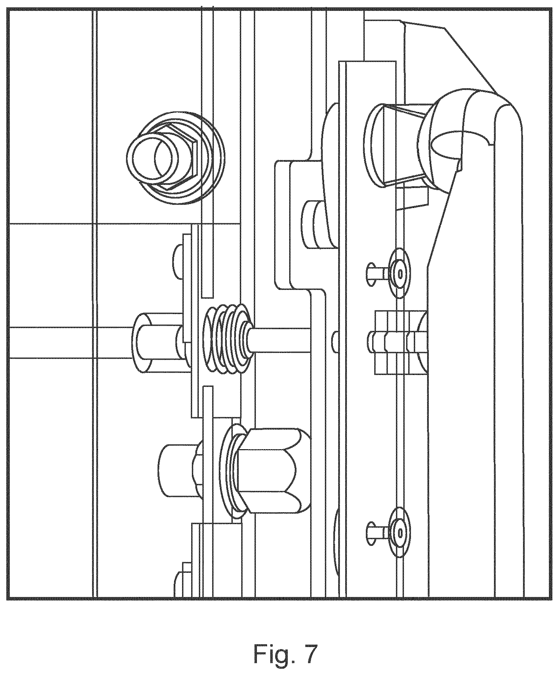

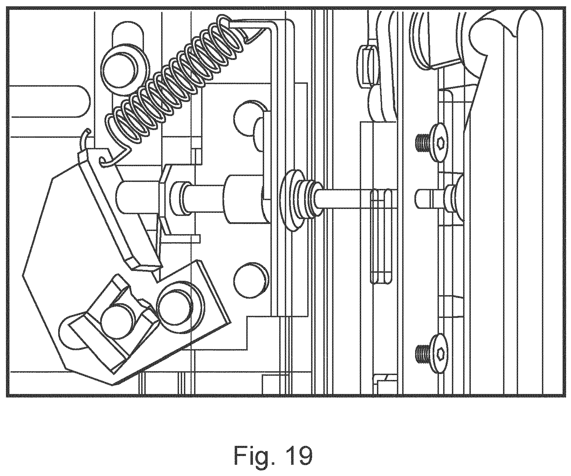

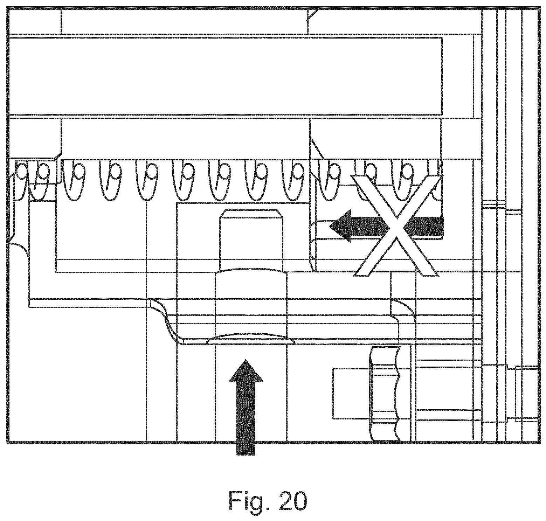

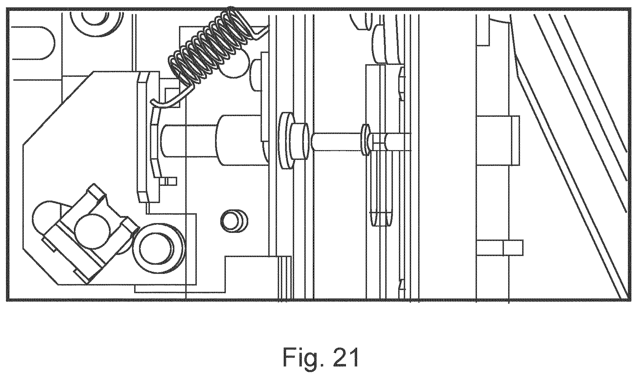

Figs. 1-21 relate to an integrated interlock system for a low, medium or high voltage switchgear with a number of different interlock system functionalities, and to one or more low, medium or high voltage switchgear having one or more of the parts of the integrated interlock system.

An example of an interlock system for a low, medium or high voltage switchgear is described below. The switchgear comprises a compartment, a door, a door handle, and a truck-mounted circuit breaker. Thus, in this example the compartment is a circuit breaker compartment. The door permits access to the inside of the compartment. The door handle is used to open and close the door. The circuit breaker is located in the compartment. The door handle is configured to move from a closed position to an open position. The interlock system is configured such that:
- when the door handle is in the closed position the door is configured not to open and when the door handle is in the open position the door is configured to open; and
- a movement of the door handle from the closed position to the open position is configured to place the circuit breaker in a locked configuration, and wherein in the locked configuration the circuit breaker cannot be operated.

According to the invention, the movement of the door handle from the closed position to the open position is configured to move a part of a coupling system away from a body portion of the door handle. When the part of the coupling system is moved away from the body portion of the door handle an interlock inside the circuit breaker truck is de-activated by the coupling system.

According to the invention, a movement of the door handle from the open position to the closed position is configured to place the circuit breaker in an unlocked configuration, and in the unlocked configuration the circuit breaker can be operated.

According to the invention, the movement of the door handle from the open position to the closed position is configured enable the part of the coupling system to move towards the body portion of the door handle. When the part of the coupling system is moved towards the body portion of the door handle the interlock inside the circuit breaker truck is activated by the coupling system.

In an example, a spring based system is configured to enable the part of the coupling system to move towards the body portion of the door handle.

According to the invention, when the door handle is in the closed position a movement of the circuit breaker from a racked out configuration to a racked in configuration is configured to place the door handle in a locked configuration where it is locked from moving from the closed position to the open position.

According to the invention, the movement of the circuit breaker from the racked out configuration to the racked in configuration is configured to move a part of a coupling system toward the body portion of the door handle. When the part of the coupling system is moved toward the body portion of the door handle it is configured to engage with the door handle to place the door handle in the locked configuration.

In an example, when the door handle is in the closed position a movement of the circuit breaker from the racked in configuration to the racked out configuration is configured to place the door handle in an unlocked configuration where it is not locked from moving from the closed position to the open position.

In an example, the movement of the circuit breaker from the racked in configuration to the racked out configuration is configured to move the part of the coupling system away from the body portion of the door handle. When the part of the coupling system is moved away from the body portion of the door handle it is configured to dis-engage with the door handle to place the door handle in the unlocked configuration.

In an example, the switchgear comprises an earthing switch and an earthing switch operation handle or bar. The interlock system is configured such that:
- when the earthing switch operation handle or bar is inserted the earthing switch is configured not to operate and when the earthing switch operation handle or bar is not inserted the earthing switch is configured to operate;
- a movement of the circuit breaker from a racked in configuration to a racked out configuration is configured to de-activate a lock, and
- de-activation of the lock is configured to enable the earthing switch operation handle or bar to be inserted.

In an example, insertion of the earthing switch operation handle or bar is configured to place the circuit breaker in the locked configuration.

In an example, insertion of the earthing switch operation handle or bar is configured to move a part of a coupling system that moves a locking flap that is configured to stop the circuit breaker from moving and place the circuit breaker in the locked configuration.

In an example, a movement of the circuit breaker from the racked out configuration to the racked in configuration is configured to activate the lock, and activation of the lock is configured to stop the earthing switch operation handle or bar from being inserted.

In an example, the movement of the circuit breaker from the racked out configuration to the racked in configuration is configured to place the circuit breaker in an unlocked configuration, and in the unlocked configuration the circuit breaker can be operated.

In an example, the switchgear comprises a second compartment, a second door, and a second door handle. Thus, the second compartment can for example be a cable connection compartment. The second door permits access to the inside of the second compartment. The second door handle is used to open and close the second door. The second door handle is configured to move from a closed position to an open position. The earthing switch is configured to be transitioned to an on state through utilization of the earthing switch operation handle or bar and the earthing switch is configured to be transitioned to an off state through utilization of the earthing switch operation handle or bar. The interlock system is configured such that:
- when the second door handle is in the closed position the second door is configured not to open and when the second door handle is in the open position the second door is configured to open; and
- when the second door handle is in the closed position a transition of the earthing switch from the on state to the off state is configured to place the second door handle in a locked configuration where it is locked from moving from the closed position to the open position.

In an example, the transition of the earthing switch from the on state to the off state is configured to move a part of a coupling system toward a body portion of the second door handle. When the part of the coupling system is moved toward the body portion of the second door handle it is configured to engage with the second door handle to place the second door handle in the locked configuration.

In an example, a spring based system is configured to enable the part of the coupling system to move towards the body portion of the second door handle.

In an example, when the second door handle is in the closed position a transition of the earthing switch from the off state to the on state is configured to place the second door handle in an unlocked configuration where it is not locked from moving from the closed position to the open position.

In an example, the transition of the earthing switch from the off state to the on state is configured to move the part of the coupling system away from the body portion of the second door handle. When the part of the coupling system is moved away from the body portion of the second door handle it is configured to dis-engage with the second door handle to place the second door handle in the unlocked configuration.

In an example, a rotation of the earthing switch operation handle or bar is configured to transition the earthing switch from the on state to the off state. An off-centred bearing or cam of the earthing switch operation handle or bar is configured to convert the rotation of the earthing switch operation handle or bar to a translational movement of a part of a coupling system. The coupling system is configured to engage with the second door handle to place the second door handle in the locked configuration.

Thus, such an interlock system can be retrofitted to an existing low, medium or high voltage switchgear is necessary.

A low, medium or high voltage switchgear can however be constructed from the start with the interlock system.

An example of such a low, medium or high voltage switchgear comprises a compartment, a door, a door handle, and a truck-mounted circuit breaker. The door permits access to the inside of the compartment. The door handle is used to open and close the door. The circuit breaker is located in the compartment. The door handle is configured to move from a closed position to an open position and a movement from the closed position to the open position is configured to place the circuit breaker in a locked configuration. In the locked configuration the circuit breaker cannot be operated. When the door handle is in the closed position the door is configured not to open and when the door handle is in the open position the door is configured to open.

According to the invention, the movement of the door handle from the closed position to the open position is configured to move a part of a coupling system away from a body portion of the door handle. When the part of the coupling system is moved away from the body portion of the door handle an interlock inside the circuit breaker truck is de-activated by the coupling system.

According to the invention, a movement of the door handle from the open position to the closed position is configured to place the circuit breaker in an unlocked configuration, and wherein in the unlocked configuration the circuit breaker can be operated.

According to the invention, the movement of the door handle from the open position to the closed position is configured enable the part of the coupling system to move towards the body portion of the door handle. When the part of the coupling system is moved towards the body portion of the door handle the interlock inside the circuit breaker truck is activated by the coupling system.

In an example, a spring based system is configured to enable the the part of the coupling system to move towards the body portion of the door handle.

According to the invention, when the door handle is in the closed position a movement of the circuit breaker from a racked out configuration to a racked in configuration is configured to place the door handle in a locked configuration where it is locked from moving from the closed position to the open position.

According to the invention, the movement of the circuit breaker from the racked out configuration to the racked in configuration is configured to move a part of a coupling system toward the body portion of the door handle. When the part of the coupling system is moved toward the body portion of the door handle it is configured to engage with the door handle to place the door handle in the locked configuration.

According to the invention, when the door handle is in the closed position a movement of the circuit breaker from the racked in configuration to the racked out configuration is configured to place the door handle in an unlocked configuration where it is not locked from moving from the closed position to the open position.

According to the invention, the movement of the circuit breaker from the racked in configuration to the racked out configuration is configured to move the part of the coupling system away from the body portion of the door handle. When the part of the coupling system is moved away from the body portion of the door handle it is configured to dis-engage with the door handle to place the door handle in the unlocked configuration.

In an example, the switchgear comprises an earthing switch and an earthing switch operation handle or bar. When the earthing switch operation handle or bar is inserted the earthing switch is configured not to operate and when the earthing switch operation handle or bar is not inserted the earthing switch is configured to operate. A movement of the circuit breaker from a racked in configuration to a racked out configuration is configured to de-activate a lock. De-activation of the lock is configured to enable the earthing switch operation handle or bar to be inserted.

In an example, insertion of the earthing switch operation handle or bar is configured to place the circuit breaker in the locked configuration.

In an example, insertion of the earthing switch operation handle or bar is configured to move a part of a coupling system that moves a locking flap that is configured to stop the circuit breaker from moving and place the circuit breaker in the locked configuration.

In an example, a movement of the circuit breaker from the racked out configuration to the racked in configuration is configured to activate the lock. Activation of the lock is configured to stop the earthing switch operation handle or bar from being inserted.

In an example, the movement of the circuit breaker from the racked out configuration to the racked in configuration is configured to place the circuit breaker in an unlocked configuration. In the unlocked configuration the circuit breaker can be operated.

In an example, the switchgear comprises a second compartment, a second door, and a second door handle. The second door permits access to the inside of the second compartment. The second door handle is used to open and close the second door. The second door handle is configured to move from a closed position to an open position. The earthing switch is configured to be transitioned to an on state through utilization of the earthing switch operation handle or bar and the earthing switch is configured to be transitioned to an off state through utilization of the earthing switch operation handle or bar. When the second door handle is in the closed position the second door is configured not to open and when the second door handle is in the open position the second door is configured to open. When the second door handle is in the closed position a transition of the earthing switch from the on state to the off state is configured to place the second door handle in a locked configuration where it is locked from moving from the closed position to the open position.

In an example, the transition of the earthing switch from the on state to the off state is configured to move a part of a coupling system toward a body portion of the second door handle. When the part of the coupling system is moved toward the body portion of the second door handle it is configured to engage with the second door handle to place the second door handle in the locked configuration.

In an example, a spring based system is configured to enable the part of the coupling system to move towards the body portion of the second door handle.

In an example, when the second door handle is in the closed position a transition of the earthing switch from the off state to the on state is configured to place the second door handle in an unlocked configuration where it is not locked from moving from the closed position to the open position.

In an example, the transition of the earthing switch from the off state to the on state is configured to move the part of the coupling system away from the body portion of the second door handle. When the part of the coupling system is moved away from the body portion of the second door handle it is configured to dis-engage with the second door handle to place the second door handle in the unlocked configuration.

In an example, a rotation of the earthing switch operation handle or bar is configured to transition the earthing switch from the on state to the off state. An off-centred bearing or cam of the earthing switch operation handle or bar is configured to convert the rotation of the earthing switch operation handle or bar to a translational movement of a part of a coupling system. The coupling system is configured to engage with the second door handle to place the second door handle in the locked configuration.

An example of an interlock system for a low, medium or high voltage switchgear is described below. The switchgear comprises a compartment, a door, a door handle, and a circuit breaker. The door permits access to the inside of the compartment. The door handle is used to open and close the door. The circuit breaker is located in the compartment. Thus, in this example the compartment is a circuit breaker compartment. The door handle is configured to move from a closed position to an open position. The interlock system is configured such that:
- when the door handle is in the closed position the door is configured not to open and when the door handle is in the open position the door is configured to open; and
- when the door handle is in the closed position a movement of the circuit breaker from a racked out configuration to a racked in configuration is configured to place the door handle in a locked configuration where it is locked from moving from the closed position to the open position.

In an example, the movement of the circuit breaker from the racked out configuration to the racked in configuration is configured to move a part of a coupling system toward the body portion of the door handle. When the part of the coupling system is moved toward the body portion of the door handle it is configured to engage with the door handle to place the door handle in the locked configuration.

In an example when the door handle is in the closed position a movement of the circuit breaker from the racked in configuration to the racked out configuration is configured to place the door handle in an unlocked configuration where it is not locked from moving from the closed position to the open position.

In an example, the movement of the circuit breaker from the racked in configuration to the racked out configuration is configured to move the part of the coupling system away from the body portion of the door handle. When the part of the coupling system is moved away from the body portion of the door handle it is configured to dis-engage with the door handle to place the door handle in the unlocked configuration.

In an example a movement of the door handle from the closed position to the open position is configured to place the circuit breaker in a locked configuration, and wherein in the locked configuration the circuit breaker cannot be operated.

In an example, the movement of the door handle from the closed position to the open position is configured to move a part of a coupling system away from a body portion of the door handle. When the part of the coupling system is moved away from the body portion of the door handle an interlock inside a circuit breaker truck is de-activated by the coupling system.

In an example a movement of the door handle from the open position to the closed position is configured to place the circuit breaker in an unlocked configuration, and in the unlocked configuration the circuit breaker can be operated.

In an example, the movement of the door handle from the open position to the closed position is configured enable the part of the coupling system to move towards the body portion of the door handle. When the part of the coupling system is moved towards the body portion of the door handle the interlock inside the circuit breaker truck is activated by the coupling system.

In an example, a spring based system is configured to enable the part of the coupling system to move towards the body portion of the door handle.

In an example the switchgear comprises an earthing switch and an earthing switch operation handle or bar. The interlock system is configured such that:
- when the earthing switch operation handle or bar is inserted the earthing switch is configured not to operate and when the earthing switch operation handle or bar is not inserted the earthing switch is configured to operate;
- a movement of the circuit breaker from a racked in configuration to a racked out configuration is configured to de-activate a lock; and
- de-activation of the lock is configured to enable the earthing switch operation handle or bar to be inserted.

In an example insertion of the earthing switch operation handle or bar is configured to place the circuit breaker in a locked configuration, and in the locked configuration the circuit breaker cannot be operated.

In an example, insertion of the earthing switch operation handle or bar is configured to move a part of a coupling system that moves a locking flap that is configured to stop the circuit breaker from moving and place the circuit breaker in the locked configuration.

In an example a movement of the circuit breaker from the racked out configuration to the racked in configuration is configured to activate the lock, and activation of the lock is configured to stop the earthing switch operation handle or bar from being inserted.

In an example the movement of the circuit breaker from the racked out configuration to the racked in configuration is configured to place the circuit breaker in an unlocked configuration, and in the unlocked configuration the circuit breaker can be operated.

In an example the switchgear comprises a second compartment, a second door, and a second door handle. The second door permits access to the inside of the second compartment. The second door handle is used to open and close the second door. The second compartment can for example be a cable connection compartment. The second door handle is configured to move from a closed position to an open position. The earthing switch is configured to be transitioned to an on state through utilization of the earthing switch operation handle or bar and the earthing switch is configured to be transitioned to an off state through utilization of the earthing switch operation handle or bar. The interlock system is configured such that:
- when the second door handle is in the closed position the second door is configured not to open and when the second door handle is in the open position the second door is configured to open;
- when the second door handle is in the closed position a transition of the earthing switch from the on state to the off state is configured to place the second door handle in a locked configuration where it is locked from moving from the closed position to the open position.

In an example, the transition of the earthing switch from the on state to the off state is configured to move a part of a coupling system toward a body portion of the second door handle. When the part of the coupling system is moved toward the body portion of the second door handle it is configured to engage with the second door handle to place the second door handle in the locked configuration.

In an example, a spring based system is configured to enable the part of the coupling system to move towards the body portion of the second door handle.

In an example, when the second door handle is in the closed position a transition of the earthing switch from the off state to the on state is configured to place the second door handle in an unlocked configuration where it is not locked from moving from the closed position to the open position.

In an example, the transition of the earthing switch from the off state to the on state is configured to move the part of the coupling system away from the body portion of the second door handle. When the part of the coupling system is moved away from the body portion of the second door handle it is configured to dis-engage with the second door handle to place the second door handle in the unlocked configuration.

In an example, a rotation of the earthing switch operation handle or bar is configured to transition the earthing switch from the on state to the off state, wherein an off-centred bearing or cam of the earthing switch operation handle or bar is configured to convert the rotation of the earthing switch operation handle or bar to a translational movement of a part of a coupling system, and wherein the coupling system is configured to engage with the second door handle to place the second door handle in the locked configuration.

Thus, such an interlock system can be retrofitted to an existing low, medium or high voltage switchgear is necessary.

A low, medium or high voltage switchgear can however be constructed from the start with the interlock system.

An example of such a low, medium or high voltage switchgear comprises a compartment, a door, a door handle, and a circuit breaker. The door permits access to the inside of the compartment. The door handle is used to open and close the door. The circuit breaker is located in the compartment. The door handle is configured to move from a closed position to an open position. When the door handle is in the closed position a movement of the circuit breaker from a racked out configuration to a racked in configuration is configured to place the door handle in a locked configuration where it is locked from moving from the closed position to the open position. When the door handle is in the closed position the door is configured not to open and when the door handle is in the open position the door is configured to open.

In an example, the movement of the circuit breaker from the racked out configuration to the racked in configuration is configured to move a part of a coupling system toward the body portion of the door handle. When the part of the coupling system is moved toward the body portion of the door handle it is configured to engage with the door handle to place the door handle in the locked configuration.

In an example, when the door handle is in the closed position a movement of the circuit breaker from the racked in configuration to the racked out configuration is configured to place the door handle in an unlocked configuration where it is not locked from moving from the closed position to the open position.

In an example, the movement of the circuit breaker from the racked in configuration to the racked out configuration is configured to move the part of the coupling system away from the body portion of the door handle. When the part of the coupling system is moved away from the body portion of the door handle it is configured to dis-engage with the door handle to place the door handle in the unlocked configuration.

In an example, a movement of the door handle from the closed position to the open position is configured to place the circuit breaker in a locked configuration, and in the locked configuration the circuit breaker cannot be operated.

In an example, the movement of the door handle from the closed position to the open position is configured to move a part of a coupling system away from a body portion of the door handle. When the part of the coupling system is moved away from the body portion of the door handle an interlock inside a circuit breaker truck is de-activated by the coupling system.

In an example, a movement of the door handle from the open position to the closed position is configured to place the circuit breaker in an unlocked configuration, and in the unlocked configuration the circuit breaker can be operated.

In an example, the movement of the door handle from the open position to the closed position is configured enable the part of the coupling system to move towards the body portion of the door handle. When the part of the coupling system is moved towards the body portion of the door handle the interlock inside the circuit breaker truck is activated by the coupling system.

In an example, a spring based system is configured to enable the the part of the coupling system to move towards the body portion of the door handle.

In an example, the switchgear comprises an earthing switch and an earthing switch operation handle or bar. When the earthing switch operation handle or bar is inserted the earthing switch is configured not to operate and when the earthing switch operation handle or bar is not inserted the earthing switch is configured to operate. A movement of the circuit breaker from a racked in configuration to a racked out configuration is configured to de-activate a lock. De-activation of the lock is configured to enable the earthing switch operation handle or bar to be inserted.

In an example, insertion of the earthing switch operation handle or bar is configured to place the circuit breaker in a locked configuration, and in the locked configuration the circuit breaker cannot be operated.

In an example, insertion of the earthing switch operation handle or bar is configured to move a part of a coupling system that moves a locking flap that is configured to stop the circuit breaker from moving and place the circuit breaker in the locked configuration.

In an example, a movement of the circuit breaker from the racked out configuration to the racked in configuration is configured to activate the lock, and activation of the lock is configured to stop the earthing switch operation handle or bar from being inserted.

In an example, the movement of the circuit breaker from the racked out configuration to the racked in configuration is configured to place the circuit breaker in an unlocked configuration, and in the unlocked configuration the circuit breaker can be operated.

In an example, the switchgear comprises a second compartment, a second door, and a second door handle. The second door permits access to the inside of the second compartment. The second door handle is used to open and close the second door. The second door handle is configured to move from a closed position to an open position. The earthing switch is configured to be transitioned to an on state through utilization of the earthing switch operation handle or bar and the earthing switch is configured to be transitioned to an off state through utilization of the earthing switch operation handle or bar. When the second door handle is in the closed position the second door is configured not to open and when the second door handle is in the open position the second door is configured to open. When the second door handle is in the closed position a transition of the earthing switch from the on state to the off state is configured to place the second door handle in a locked configuration where it is locked from moving from the closed position to the open position.

In an example, the transition of the earthing switch from the on state to the off state is configured to move a part of a coupling system toward a body portion of the second door handle. When the part of the coupling system is moved toward the body portion of the second door handle it is configured to engage with the second door handle to place the second door handle in the locked configuration.

In an example, a spring based system is configured to enable the part of the coupling system to move towards the body portion of the second door handle.

In an example, when the second door handle is in the closed position a transition of the earthing switch from the off state to the on state is configured to place the second door handle in an unlocked configuration where it is not locked from moving from the closed position to the open position.

In an example, the transition of the earthing switch from the off state to the on state is configured to move the part of the coupling system away from the body portion of the second door handle. When the part of the coupling system is moved away from the body portion of the second door handle it is configured to dis-engage with the second door handle to place the second door handle in the unlocked configuration.

In an example, a rotation of the earthing switch operation handle or bar is configured to transition the earthing switch from the on state to the off state. An off-centred bearing or cam of the earthing switch operation handle or bar is configured to convert the rotation of the earthing switch operation handle or bar to a translational movement of a part of a coupling system. The coupling system is configured to engage with the second door handle to place the second door handle in the locked configuration.

An example of an interlock system for a low, medium or high voltage switchgear is described below. The switchgear comprises a compartment, a circuit breaker, an earthing switch, and an earthing switch operation handle or bar. The circuit breaker is located in the compartment. Thus, in this example the compartment is a circuit breaker compartment. The interlock system is configured such that:
- when the earthing switch operation handle or bar is inserted the earthing switch is configured not to operate and when the earthing switch operation handle or bar is not inserted the earthing switch is configured to operate;
- a movement of the circuit breaker from a racked in configuration to a racked out configuration is configured to de-activate a lock; and
- de-activation of the lock is configured to enable the earthing switch operation handle or bar to be inserted.

In an example, insertion of the earthing switch operation handle or bar is configured to place the circuit breaker in a locked configuration, and in the locked configuration the circuit breaker cannot be operated.

In an example, insertion of the earthing switch operation handle or bar is configured to move a part of a coupling system that moves a locking flap that is configured to stop the circuit breaker from moving and place the circuit breaker in the locked configuration.

In an example, a movement of the circuit breaker from the racked out configuration to the racked in configuration is configured to activate the lock, and activation of the lock is configured to stop the earthing switch operation handle or bar from being inserted.

In an example, the movement of the circuit breaker from the racked out configuration to the racked in configuration is configured to place the circuit breaker in an unlocked configuration, and in the unlocked configuration the circuit breaker can be operated.

In an example, the switchgear comprises a door and a door handle. The door permits access to the inside of the compartment. The door handle is used to open and close the door. The door handle is configured to move from a closed position to an open position. The interlock system is configured such that:
- a movement of the handle from the closed position to the open position is configured to place the circuit breaker in a locked configuration;
- in the locked configuration the circuit breaker cannot be operated; and
- when the door handle is in the closed position the door is configured not to open and when the door handle is in the open position the door is configured to open.

In an example, a movement of the door handle from the open position to the closed position is configured to place the circuit breaker in an unlocked configuration, and wherein in the unlocked configuration the circuit breaker can be operated.

In an example, when the door handle is in the closed position a movement of the circuit breaker from the racked out configuration to the racked in configuration is configured to place the door handle in a locked configuration where it is locked from moving from the closed position to the open position.

In an example, when the door handle is in the closed position a movement of the circuit breaker from the racked in configuration to the racked out configuration is configured to place the door handle in an unlocked configuration where it is not locked from moving from the closed position to the open position.

Thus, such an interlock system can be retrofitted to an existing low, medium or high voltage switchgear is necessary.

A low, medium or high voltage switchgear can however be constructed from the start with the interlock system.

An example of such a low, medium or high voltage switchgear comprises a compartment, a circuit breaker, an earthing switch, and an earthing switch operation handle or bar. The circuit breaker is located in the compartment. When the earthing switch operation handle or bar is inserted the earthing switch is configured not to operate and when the earthing switch operation handle or bar is not inserted the earthing switch is configured to operate. A movement of the circuit breaker from a racked in configuration to a racked out configuration is configured to de-activate a lock.

De-activation of the lock is configured to enable the earthing switch operation handle or bar to be inserted.

In an example, insertion of the earthing switch operation handle or bar is configured to place the circuit breaker in a locked configuration, and in the locked configuration the circuit breaker cannot be operated.

In an example, insertion of the earthing switch operation handle or bar is configured to move a part of a coupling system that moves a locking flap that is configured to stop the circuit breaker from moving and place the circuit breaker in the locked configuration.

In an example, a movement of the circuit breaker from the racked out configuration to the racked in configuration is configured to activate the lock, and activation of the lock is configured to stop the earthing switch operation handle or bar from being inserted.

In an example, the movement of the circuit breaker from the racked out configuration to the racked in configuration is configured to place the circuit breaker in an unlocked configuration, and in the unlocked configuration the circuit breaker can be operated.

In an example, the switchgear comprises a door and a door handle. The door permits access to the inside of the compartment. The door handle is used to open and close the door. The door handle is configured to move from a closed position to an open position. A movement of the door handle from the closed position to the open position is configured to place the circuit breaker in a locked configuration. In the locked configuration the circuit breaker cannot be operated. When the door handle is in the closed position the door is configured not to open and when the door handle is in the open position the door is configured to open.

In an example, a movement of the door handle from the open position to the closed position is configured to place the circuit breaker in an unlocked configuration, and in the unlocked configuration the circuit breaker can be operated.

In an example, when the door handle is in the closed position a movement of the circuit breaker from the racked out configuration to the racked in configuration is configured to place the door handle in a locked configuration where it is locked from moving from the closed position to the open position.

In an example, when the door handle is in the closed position a movement of the circuit breaker from the racked in configuration to the racked out configuration is configured to place the door handle in an unlocked configuration where it is not locked from moving from the closed position to the open position.

An example of an interlock system for a low, medium or high voltage switchgear is described below. The switchgear comprises a compartment, a door, a door handle, an earthing switch, and an earthing switch operation handle or bar. The door permits access to the inside of the compartment. The compartment can for example be a cable connection compartment. The door handle is used to open and close the door. The door handle is configured to move from a closed position to an open position. The earthing switch is configured to be transitioned to an on state through utilization of the earthing switch operation handle or bar and the earthing switch is configured to be transitioned to an off state through utilization of the earthing switch operation handle or bar. The interlock system is configured such that:
- when the door handle is in the closed position the door is configured not to open and when the door handle is in the open position the door is configured to open; and
- when the door handle is in the closed position a transition of the earthing switch from the on state to the off state is configured to place the door handle in a locked configuration where it is locked from moving from the closed position to the open position.

In an example, the transition of the earthing switch from the on state to the off state is configured to move a part of a coupling system toward a body portion of the door handle. When the part of the coupling system is moved toward the body portion of the door handle it is configured to engage with the door handle to place the door handle in the locked configuration.

In an example, a spring based system is configured to enable the part of the coupling system to move towards the body portion of the door handle.

In an example, when the door handle is in the closed position a transition of the earthing switch from the off state to the on state is configured to place the door handle in an unlocked configuration where it is not locked from moving from the closed position to the open position.

In an example, the transition of the earthing switch from the off state to the on state is configured to move the part of the coupling system away from a body portion of the door handle. When the part of the coupling system is moved away from the body portion of the door handle it is configured to dis-engage with the door handle to place the door handle in the unlocked configuration.

In an example, a rotation of the earthing switch operation handle or bar is configured to transition the earthing switch from the on state to the off state. An off-centred bearing or cam of the earthing switch operation handle or bar is configured to convert the rotation of the earthing switch operation handle or bar to a translational movement of a part of a coupling system. The coupling system is configured to engage with the door handle to place the door handle in the locked configuration.

In an example, the switchgear comprises a second compartment, a second door, a second door handle, and a circuit breaker. The second door permits access to the inside of the second compartment. The second door handle is used to open and close the second door. The circuit breaker is located in the second compartment. the second compartment can be a circuit breaker compartment. The second door handle is configured to move from a closed position to an open position. The interlock system is configured such that:
- a movement of the second door handle from the closed position to the open position is configured to place the circuit breaker in a locked configuration;
- in the locked configuration the circuit breaker cannot be operated; and
- when the second door handle is in the closed position the second door is configured not to open and when the second door handle is in the open position the second door is configured to open.

In an example, the movement of the second door handle from the closed position to the open position is configured to move a part of a coupling system away from a body portion of the second door handle. When the part of the coupling system is moved away from the body portion of the second door handle an interlock inside a circuit breaker truck is de-activated by the coupling system.

In an example, a movement of the second door handle from the open position to the closed position is configured to place the circuit breaker in an unlocked configuration, and in the unlocked configuration the circuit breaker can be operated.

In an example, the movement of the second door handle from the open position to the closed position is configured enable the part of the coupling system to move towards the body portion of the second door handle. When the part of the coupling system is moved towards the body portion of the second door handle the interlock inside the circuit breaker truck is activated by the coupling system.

In an example, a spring based system is configured to enable the part of the coupling system to move towards the body portion of the second door handle.

In an example, when the second door handle is in the closed position a movement of the circuit breaker from a racked out configuration to a racked in configuration is configured to place the second door handle in a locked configuration where it is locked from moving from the closed position to the open position.

In an example, the movement of the circuit breaker from the racked out configuration to the racked in configuration is configured to move a part of a coupling system toward the body portion of the second door handle. When the part of the coupling system is moved toward the body portion of the second door handle it is configured to engage with the second door handle to place the door handle in the locked configuration.

In an example, when the door handle is in the closed position a movement of the circuit breaker from the racked in configuration to the racked out configuration is configured to place the second door handle in an unlocked configuration where it is not locked from moving from the closed position to the open position.

In an example, the movement of the circuit breaker from the racked in configuration to the racked out configuration is configured to move the part of the coupling system away from the body portion of the second door handle. When the part of the coupling system is moved away from the body portion of the second door handle it is configured to dis-engage with the door handle to place the door handle in the unlocked configuration.

In an example, when the earthing switch operation handle or bar is inserted the earthing switch is configured not to operate and when the earthing switch operation handle or bar is not inserted the earthing switch is configured to operate. A movement of the circuit breaker from a racked in configuration to a racked out configuration is configured to de-activate a lock, and de-activation of the lock is configured to enable the earthing switch operation handle or bar to be inserted.

In an example, insertion of the earthing switch operation handle or bar is configured to place the circuit breaker in the locked configuration.

In an example, insertion of the earthing switch operation handle or bar is configured to move a part of a coupling system that moves a locking flap that is configured to stop the circuit breaker from moving and place the circuit breaker in the locked configuration.

In an example, a movement of the circuit breaker from the racked out configuration to the racked in configuration is configured to activate the lock, and activation of the lock is configured to stop the earthing switch operation handle or bar from being inserted.

In an example, the movement of the circuit breaker from the racked out configuration to the racked in configuration is configured to place the circuit breaker in an unlocked configuration, and in the unlocked configuration the circuit breaker can be operated.

Thus, such an interlock system can be retrofitted to an existing low, medium or high voltage switchgear is necessary.

A low, medium or high voltage switchgear can however be constructed from the start with the interlock system.

An example of such a low, medium or high voltage switchgear comprises a compartment, a door, a door handle, an earthing switch, and an earthing switch operation handle or bar. The door permits access to the inside of the compartment. The door handle is used to open and close the door. The door handle is configured to move from a closed position to an open position. The earthing switch is configured to be transitioned to an on state through utilization of the earthing switch operation handle or bar and the earthing switch is configured to be transitioned to an off state through utilization of the earthing switch operation handle or bar. When the door handle is in the closed position the door is configured not to open and when the door handle is in the open position the door is configured to open. When the door handle is in the closed position a transition of the earthing switch from the on state to the off state is configured to place the door handle in a locked configuration where it is locked from moving from the closed position to the open position.

In an example, the transition of the earthing switch from the on state to the off state is configured to move a part of a coupling system toward a body portion of the door handle. When the part of the coupling system is moved toward the body portion of the door handle it is configured to engage with the door handle to place the door handle in the locked configuration.

In an example, a spring based system is configured to enable the part of the coupling system to move towards the body portion of the door handle.

In an example, when the door handle is in the closed position a transition of the earthing switch from the off state to the on state is configured to place the door handle in an unlocked configuration where it is not locked from moving from the closed position to the open position.

In an example, the transition of the earthing switch from the off state to the on state is configured to move the part of the coupling system away from a body portion of the door handle. When the part of the coupling system is moved away from the body portion of the door handle it is configured to dis-engage with the door handle to place the door handle in the unlocked configuration.

In an example, a rotation of the earthing switch operation handle or bar is configured to transition the earthing switch from the on state to the off state. An off-centred bearing or cam of the earthing switch operation handle or bar is configured to convert the rotation of the earthing switch operation handle or bar to a translational movement of a part of a coupling system. The coupling system is configured to engage with the door handle to place the door handle in the locked configuration.

In an example, the switchgear comprises a second compartment, a second door, a second door handle, and a circuit breaker. The second door permits access to the inside of the second compartment. The second door handle is used to open and close the second door. The circuit breaker is located in the second compartment. The second door handle is configured to move from a closed position to an open position and a movement from the closed position to the open position is configured to place the circuit breaker in a locked configuration. In the locked configuration the circuit breaker cannot be operated. When the second door handle is in the closed position the second door is configured not to open and when the second door handle is in the open position the second door is configured to open.

In an example, the movement of the second door handle from the closed position to the open position is configured to move a part of a coupling system away from a body portion of the second door handle. When the part of the coupling system is moved away from the body portion of the second door handle an interlock inside a circuit breaker truck is de-activated by the coupling system.

In an example, a movement of the second door handle from the open position to the closed position is configured to place the circuit breaker in an unlocked configuration, and in the unlocked configuration the circuit breaker can be operated.

In an example, the movement of the second door handle from the open position to the closed position is configured enable the part of the coupling system to move towards the body portion of the second door handle. When the part of the coupling system is moved towards the body portion of the second door handle the interlock inside the circuit breaker truck is activated by the coupling system.

In an example, a spring based system is configured to enable the the part of the coupling system to move towards the body portion of the second door handle.

In an example, when the second door handle is in the closed position a movement of the circuit breaker from a racked out configuration to a racked in configuration is configured to place the second door handle in a locked configuration where it is locked from moving from the closed position to the open position.

In an example, the movement of the circuit breaker from the racked out configuration to the racked in configuration is configured to move a part of a coupling system toward the body portion of the second door handle. When the part of the coupling system is moved toward the body portion of the second door handle it is configured to engage with the second door handle to place the door handle in the locked configuration.

In an example, when the door handle is in the closed position a movement of the circuit breaker from the racked in configuration to the racked out configuration is configured to place the second door handle in an unlocked configuration where it is not locked from moving from the closed position to the open position.

In an example, the movement of the circuit breaker from the racked in configuration to the racked out configuration is configured to move the part of the coupling system away from the body portion of the second door handle. When the part of the coupling system is moved away from the body portion of the second door handle it is configured to dis-engage with the door handle to place the door handle in the unlocked configuration.

In an example, when the earthing switch operation handle or bar is inserted the earthing switch is configured not to operate and when the earthing switch operation handle or bar is not inserted the earthing switch is configured to operate. A movement of the circuit breaker from a racked in configuration to a racked out configuration is configured to de-activate a lock. De-activation of the lock is configured to enable the earthing switch operation handle or bar to be inserted.

In an example, insertion of the earthing switch operation handle or bar is configured to place the circuit breaker in the locked configuration.

In an example, insertion of the earthing switch operation handle or bar is configured to move a part of a coupling system that moves a locking flap that is configured to stop the circuit breaker from moving and place the circuit breaker in the locked configuration.

In an example, a movement of the circuit breaker from the racked out configuration to the racked in configuration is configured to activate the lock, and activation of the lock is configured to stop the earthing switch operation handle or bar from being inserted.

In an example, the movement of the circuit breaker from the racked out configuration to the racked in configuration is configured to place the circuit breaker in an unlocked configuration, and in the unlocked configuration the circuit breaker can be operated.

The interlock system has been described with respect to a low, medium or high voltage switchgear, but finds utility in other situations where access to compartments needs to be controlled, for example for control gear.

The interlock system for a low, medium or high voltage switchgear and a low, medium or high voltage switchgear having such an integrated interlock system as discussed in further details, where again reference is made to the figures.

Fig. 1 shows an example of the handle used in the new interlocking system. The lefthand figure shows the handle having been operated to open the door to the compartment. The door is therefore unsecured, and the handle is unlocked. However, the interlock system has ensured that the circuit breaker (CB) or earthing switch (ES) are locked and can't be operated. The second figure from the left is indicative of the door having been closed (secured), however the handle is in an un-closed and unlocked state. Again, the interlock system has ensured that the circuit breaker or earthing switch are locked and can't be operated. In the third from left figure, the handle is in a closed state but has not yet been locked. The circuit breaker or a switch have now been placed in unlocked states by the interlock system, and can be operated. As shown in the figure closing of the handle activated a pushrod connected to a coupling system of the interlock system that led to the circuit breaker or earthing switch becoming unlocked, and where they can be activated or operated. The righthand figure, shows the handle in the closed state but now the handle has been locked and cannot be opened. What has occurred is that an active element within the switchgear has entered a state that could be considered dangerous, for example a circuit breaker has been racked to a position where it can now operate, and this has activated a coupling system which has led to a pushrod being pushed into the handle and that has then locked the handle.

Thus the individual figures of Fig. 1 show the stages of handle operation. The interlocking system has in effect separated the motion of closing and securing the door against internal arc and the unlocking the interlock. The interlocking system takes information from handle and only after the door is properly secured (today interlocking takes information only from door position itself - not connected to the handle in any way). Another feature of the new interlocking and new safety handle is that the interlocking system blocks opening of the door by blocking the handle and not the door itself.

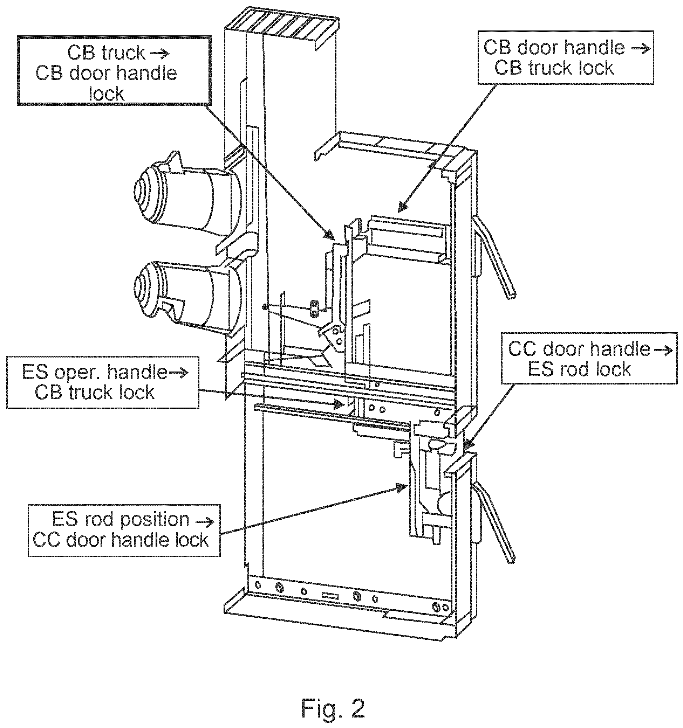

Fig. 2 shows a complete interlock system within a switchgear.

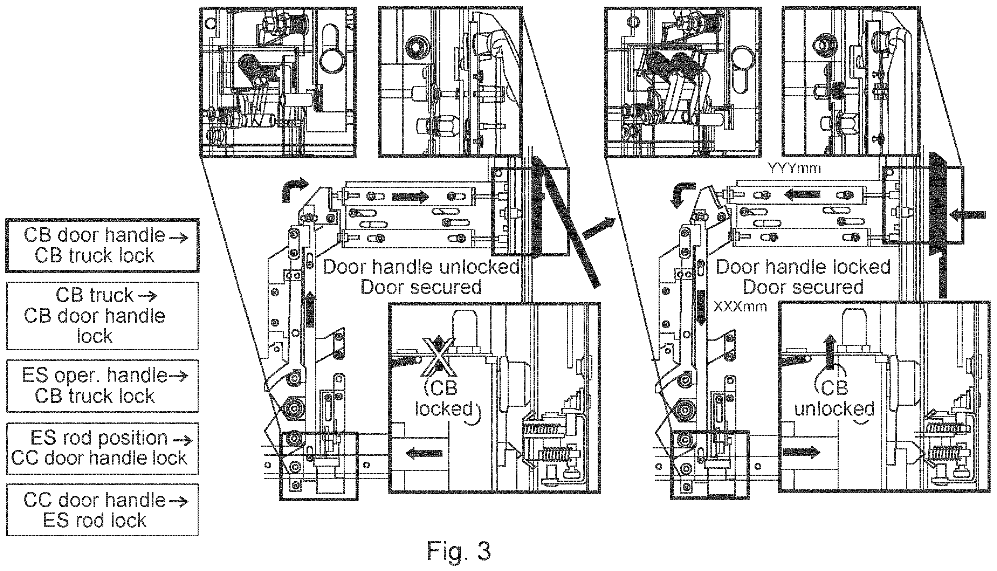

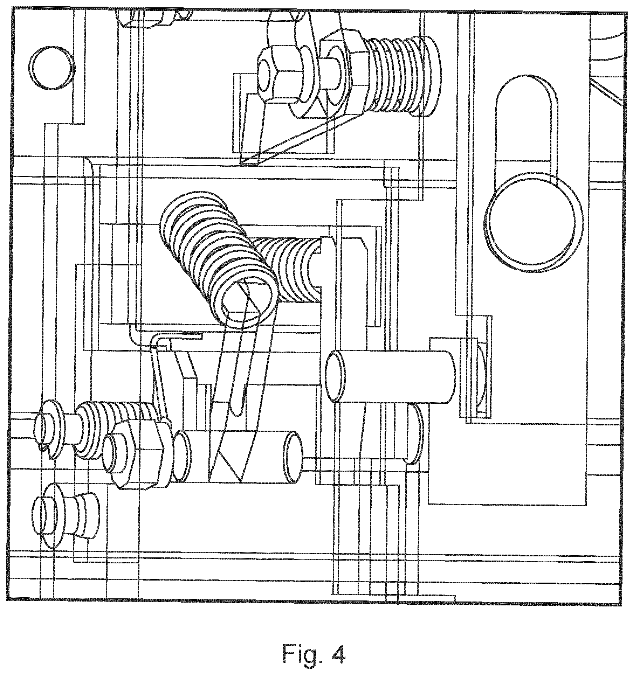

Figs. 3-7 shows motion of the interlocking system for locking and unlocking the CB. Fig. 3 is an overall figure, with Figs. 4-7 showing expanded portions of regions highlighted in Fig. 3, and in effect shows the interaction between the CB door handle and the CB truck lock.. If the handle is "clicked in" the pin inside the handle pushes a horizontal slider. This motion is transferred downwards in the figures, which releases a locking flap that deactivates/activates an already existing interlock inside the CB truck. If the handle is "clicked out" a vertical slider that is under a spring will move up and move the locking flap out and lock the CB truck.

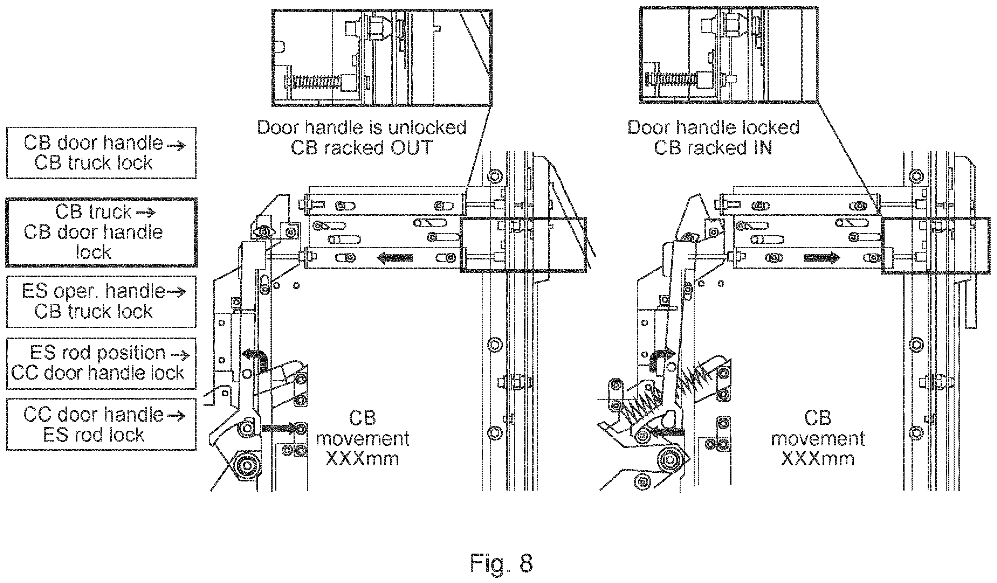

Fig. 8 shows the motion to lock the handle to lock the door, and in effect shows the interaction between the CB truck and the CB door handle lock. Inward CB motion rotates the lever which pushes the slider out which locks the handle. Outward movement of CB in the opposite direction releases the handle so it can be clicked out and the door can be opened.

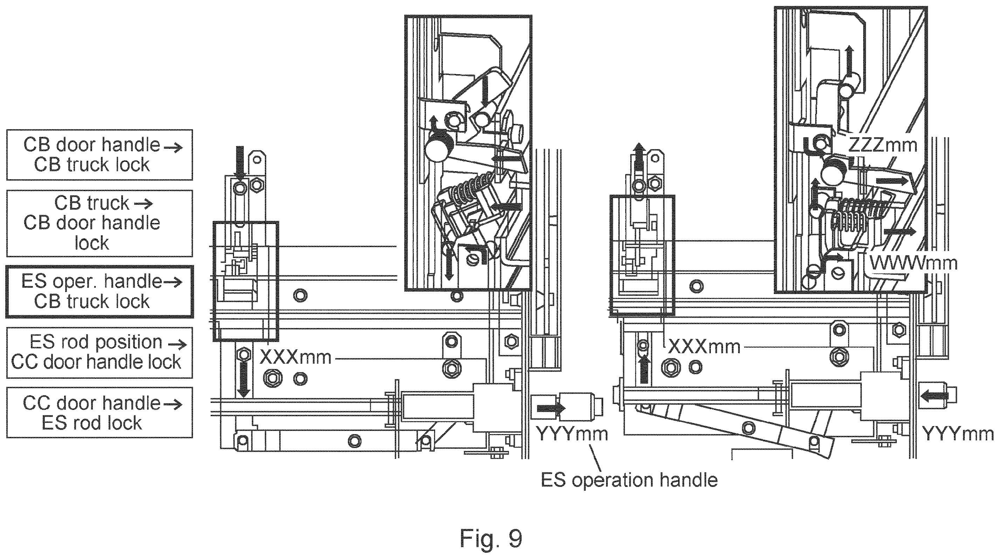

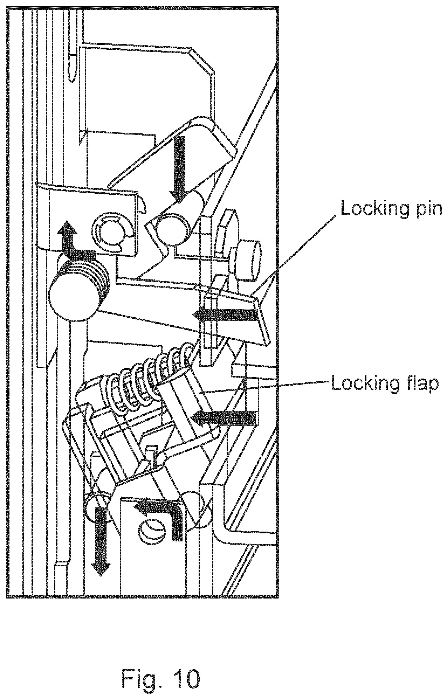

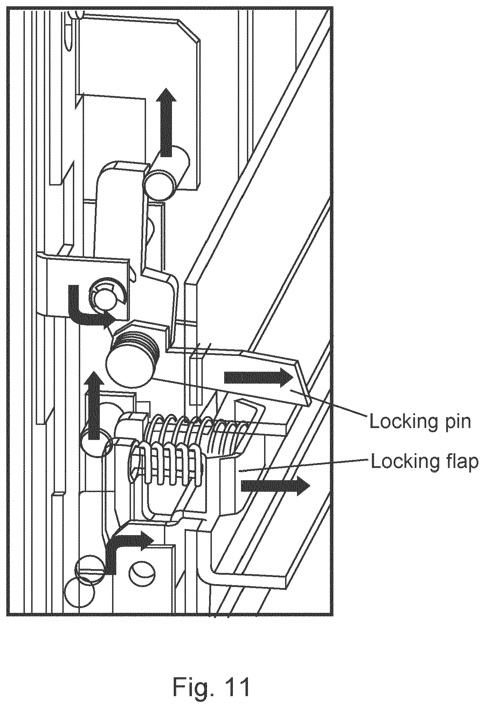

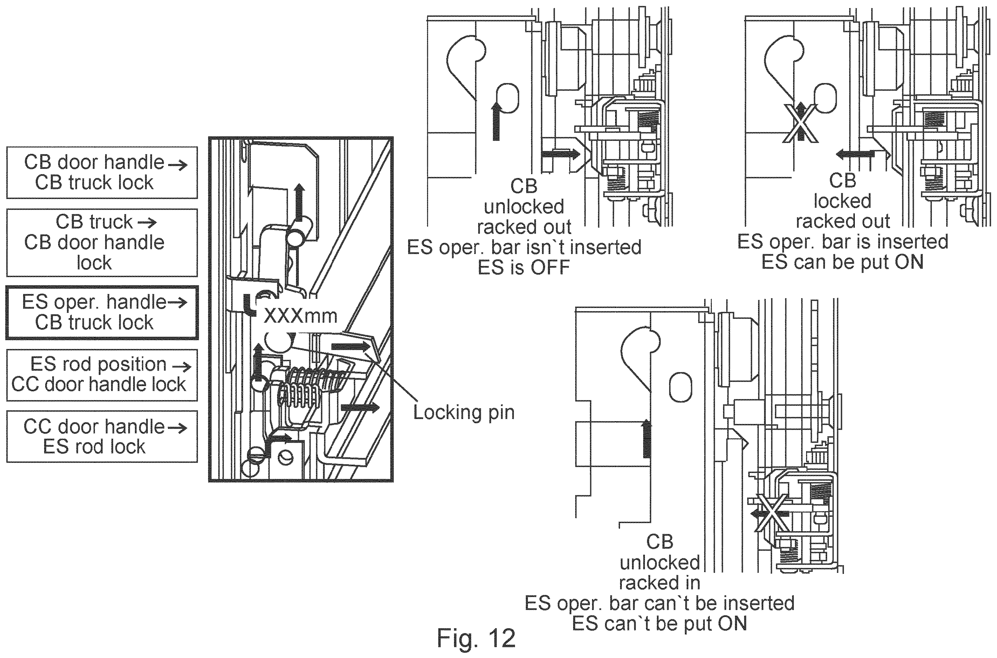

Figs. 9-12 shows interlocking between the earthing switch (ES) operation and CB, and in effect shows the interaction between the ES operation handle or bar and the CB truck lock. Fig. 9 is an overall figure, with Figs. 10 and 11 showing expanded portions of regions highlighted in Fig. 9 and with Fig. 12 showing representative interlock features. The interlocking between the earthing switch and circuit breaker has two functions to lock the motion of the CB if ES operation handle is inserted and to block insertion of the ES operation handle if the CB is not fully racked out from contacts. Insertion of the ES operation handle moves the lever and the vertical slider up which pushes out the locking flap and the CB is blocked. At the same time the locking pin is pushed out as well. This can happen only if the CB is racked out and not in the way of the locking pin. Otherwise the outward motion of locking pin will be blocked by the CB and the ES operation handle could not be inserted.

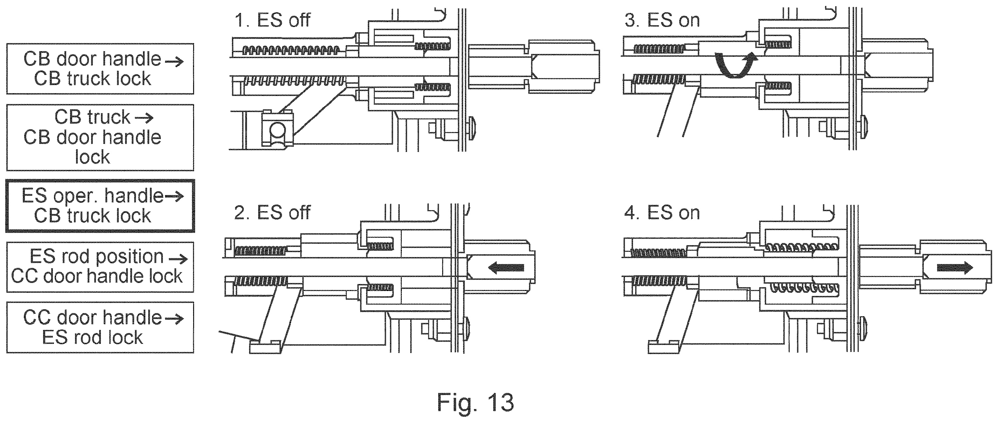

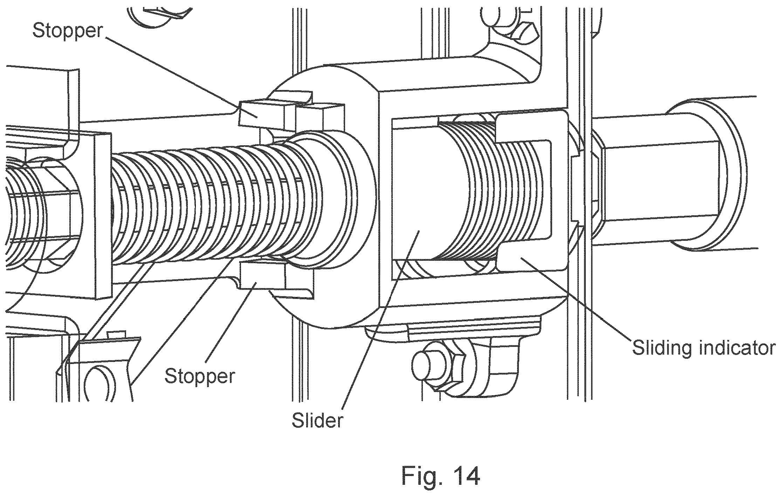

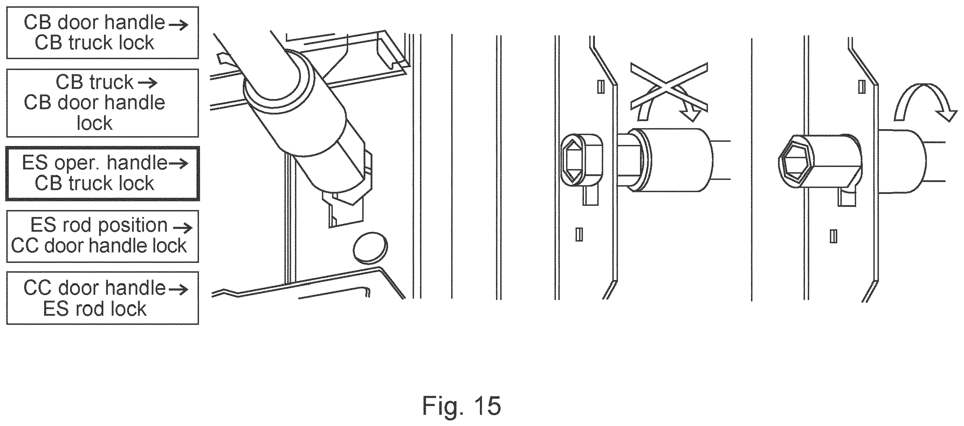

Figs. 13 and 14 shows further details relating to the interaction between the ES operation handle or bar and the CB truck lock. shows hidden parts. As shown in image 1 of Fig. 13, the earthing switch is off and the operating lever or rod is out (also called an earthing switch operation handle or bar). As shown in image 2 of Fig. 13, an indicator and slider are pushed by inserting the operation lever and previously explained locking pin and flap are out but the ES is still off. As shown in image 3 of Fig. 13, the ES is switched on by rotating the operating lever. As shown in image 4 of Fig. 13, after removing the operating lever the slider will stay out of the housing (the interlocking is still activated and CB cannot be racked in) but the indicator will be pushed back by spring so it would be visible from outside and the status of the ES will be clear for the operator. The housing has also two stoppers that allows only correct rotation, as shown in Fig. 14. Plus the key hole on the housing allows rotation only if the operating lever is inserted sufficiently. Sufficient insertion is also covered by next key hole in the frame (as shown in Fig. 15, which shows that the operating lever has to be inserted fully before being able to be turned due to the first section having a hexagonal cross-section forward of a circular neck portion).

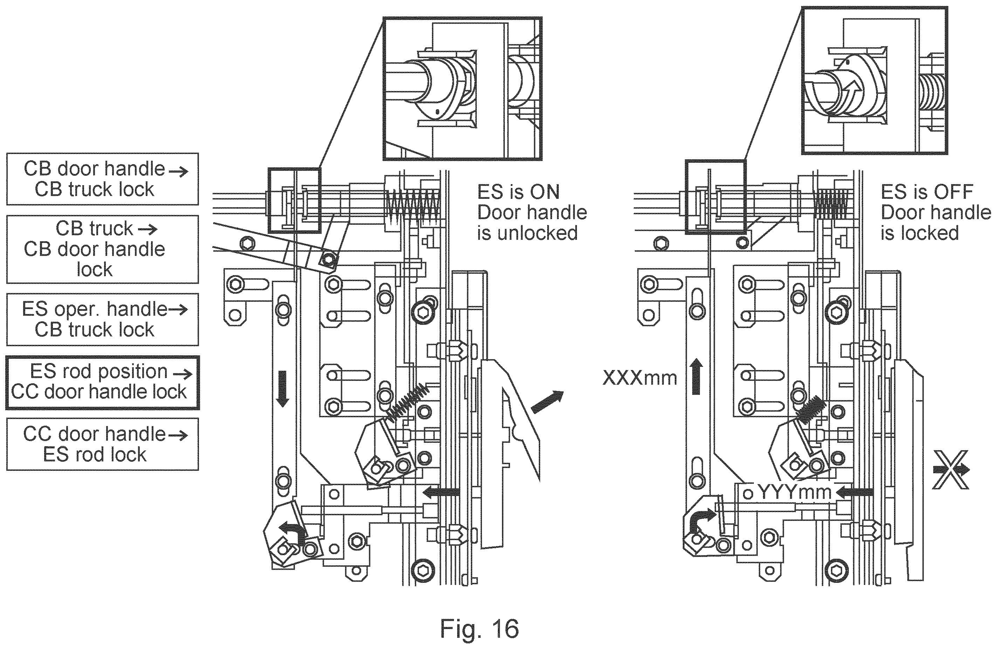

Fig. 16 shows the blocking of compartment (CC) door handle, and in effect shows interaction between the ES rod position and the CC door handle lock. This operates in effect in the same manner as for the CB door, but with different initiation. The ES is switched ON or OFF by rotation of the hexagonal shaft. On the shaft is a cam that moves a vertical slider and this is through a lever transferred to a horizontal slider which locks or unlocks the handle. In Fig. 16 the distance ""XXXmm" can for example be 8mm, but other distances are possible, and the distance "YYYmm" can for example be 10 mm, but other distances are possible.

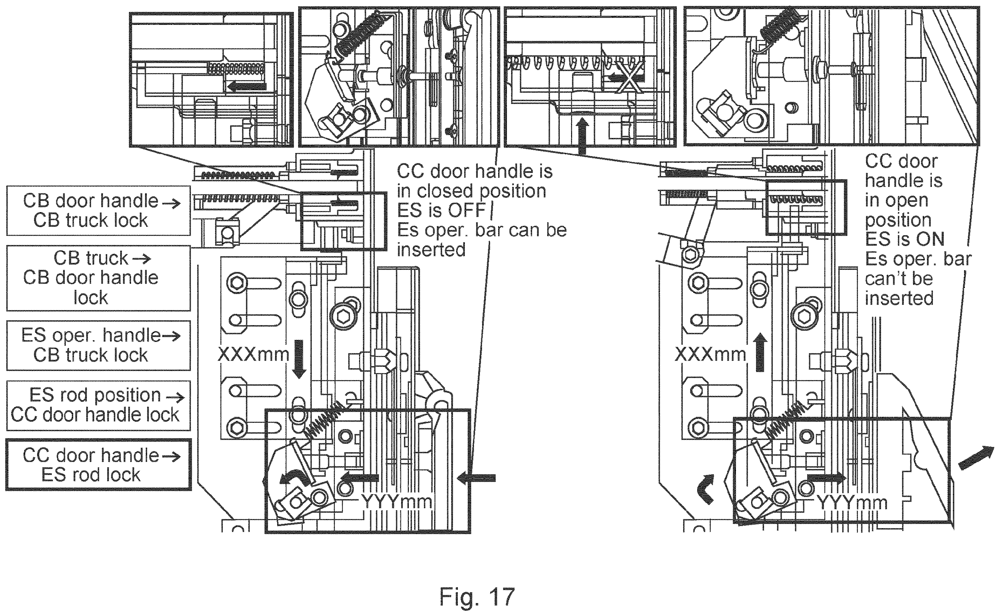

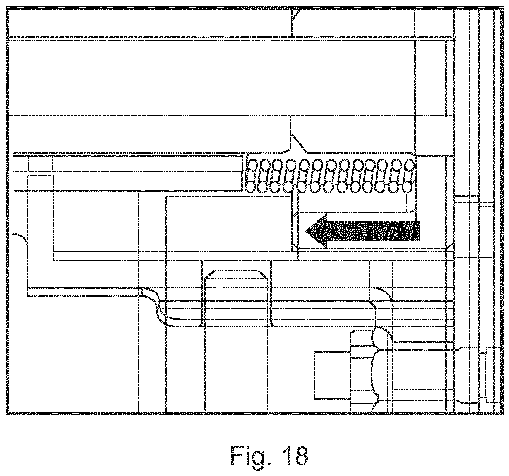

Figs. 17-21 shows blocking the insertion of the ES operational handle that reacts again to the position of the handle. In effect shows interaction between the cable compartment (CC) door handle and the earthing switch (ES) rod lock. Fig. 17 shows an overall view, with Figs. 18-21 showing expanded pictures of particular features shown in Fig, 17. A new feature is that the blocking pin is hidden behind a sliding indicator and because the hexagonal shaft is hidden the operational handle cannot be inserted on the shaft even partially and thus the ES can be operated.

The new low, medium or high voltage switchgear with such an integrated interlock system prevents the dangerous situations from happening.

The interlocking system takes information from the handle and not just the door. Doors are protected against internal arc by the interlock system that has a new safety handle before the interlock can be unlocked . Also the safety handle is blocked and hidden, and excessive force can't be applied, and not just the slider inside the door. This is different to the door handle of today that is always accessible for touch and operation, even if the door is blocked.

In terms of earthing switch (ES) and circuit breaker (CB) interlocking, the new technology provides that the interlocking is activated by "insertion/activation" of the handle itself (today you need to open a shutter and then you can insert the ES operation handle). Also, a housing hides a blocking pin behind a sliding indicator that is not accessible and if activated you can't insert the ES handle - not even partially. Also there is integrated stopper for only correct rotation of the ES handle.

## Claims

1. A low, medium or high voltage switchgear, the switchgear comprising:
- an interlock system;
- a compartment;
- a door;
- a door handle; and
- a truck-mounted circuit breaker
wherein, the door permits access to the inside of the compartment;
wherein the door handle is used to open and close the door;
wherein the circuit breaker is located in the compartment;
wherein the door handle is configured to move from a closed position to an open position; and
wherein the interlock system is configured such that:
when the door handle is in the closed position the door is configured not to open and when the door handle is in the open position the door is configured to open; wherein a movement of the door handle from the closed position to the open position is configured to move a part of a coupling system away from a body portion of the door handle, and wherein when the part of the coupling system is moved away from the body portion of the door handle an interlock inside the circuit breaker truck is de-activated by the coupling system to place the circuit breaker in a locked configuration, and wherein in the locked configuration the circuit breaker cannot be operated; wherein a movement of the door handle from the open position to the closed position is configured to enable the part of the coupling system to move towards the body portion of the door handle, wherein when the part of the coupling system is moved towards the body portion of the door handle the interlock inside the circuit breaker truck is activated by the coupling system to place the circuit breaker in an unlocked configuration, and wherein in the unlocked configuration the circuit breaker can be operated;
wherein when the door handle is in the closed position a movement of the circuit breaker from a racked out configuration to a racked in configuration is configured to place the door handle in a locked configuration where it is locked from moving from the closed position to the open position, wherein the movement of the circuit breaker from the racked out configuration to the racked in configuration is configured to move a part of a coupling system toward the body portion of the door handle, wherein when the part of the coupling system is moved toward the body portion of the door handle it is configured to engage with the door handle to place the door handle in the locked configuration.

2. Switchgear according to claim 1, wherein when the door handle is in the closed position a movement of the circuit breaker from the racked in configuration to the racked out configuration is configured to place the door handle in an unlocked configuration where it is not locked from moving from the closed position to the open position.

3. Switchgear according to any of claims 1-2, wherein the switchgear comprises an earthing switch and an earthing switch operation handle or bar, wherein when the earthing switch operation handle or bar is inserted the earthing switch is configured to operate and when the earthing switch operation handle or bar is not inserted the earthing switch is configured not to operate, wherein a movement of the circuit breaker from the racked in configuration to the racked out configuration is configured to de-activate a lock, and wherein de-activation of the lock is configured to enable the earthing switch operation handle or bar to be inserted.

4. Switchgear according to claim 3, wherein insertion of the earthing switch operation handle or bar is configured to place the circuit breaker in a locked configuration, and wherein in the locked configuration the circuit breaker cannot be operated.

5. Switchgear according to any of claims 3-4, wherein a movement of the circuit breaker from the racked out configuration to the racked in configuration is configured to activate the lock, and wherein activation of the lock is configured to stop the earthing switch operation handle or bar from being inserted.

6. Switchgear according to claim 5, wherein the movement of the circuit breaker from the racked out configuration to the racked in configuration is configured to place the circuit breaker in the unlocked configuration.

7. Switchgear according to any of claims 3-6, wherein the switchgear comprises:
- a second compartment;
- a second door; and
- a second door handle;
wherein, the second door permits access to the inside of the second compartment;
wherein the second door handle is used to open and close the second door;
wherein the second door handle is configured to move from a closed position to an open position;
wherein the earthing switch is configured to be transitioned to an on state through utilization of the earthing switch operation handle or bar and the earthing switch is configured to be transitioned to an off state through utilization of the earthing switch operation handle or bar;
wherein when the second door handle is in the closed position the second door is configured not to open and when the second door handle is in the open position the second door is configured to open; and
wherein when the second door handle is in the closed position a transition of the earthing switch from the on state to the off state is configured to place the second door handle in a locked configuration where it is locked from moving from the closed position to the open position.

## Patentansprüche

1. Nieder-, Mittel- oder Hochspannungsschaltanlage, wobei die Schaltanlage umfasst:
- ein Verriegelungssystem;
- ein Abteil;
- eine Tür;
- einen Türgriff; und
- einen Leistungsschalter;
wobei die Tür Zugang zum Inneren des Abteils ermöglicht;
wobei der Türgriff zum Öffnen und Schließen der Tür verwendet wird;
wobei der Leistungsschalter in dem Abteil angeordnet ist;
wobei der Türgriff dazu ausgebildet ist, sich von einer geschlossenen Stellung in eine offene Stellung zu bewegen; und
wobei das Verriegelungssystem derart ausgebildet ist, dass:
wenn sich der Türgriff in der geschlossenen Stellung befindet, die Tür dazu ausgebildet ist, sich nicht zu öffnen, und wenn sich der Türgriff in der offenen Stellung befindet, die Tür dazu ausgebildet ist, sich zu öffnen;
wobei eine Bewegung des Türgriffs von der geschlossenen Stellung in die offene Stellung dazu ausgebildet ist, den Leistungsschalter in eine verriegelte Konfiguration zu versetzen, wobei die Bewegung des Türgriffs von der geschlossenen Stellung in die offene Stellung dazu ausgebildet ist, einen Teil eines Kopplungssystems von einem Körperabschnitt des Türgriffs weg zu bewegen, und wobei, wenn der Teil des Kopplungssystems von dem Körperabschnitt des Türgriffs weg bewegt wird, eine Verriegelung innerhalb eines Leistungsschalterwagens durch das Kopplungssystem deaktiviert wird, um den Leistungsschalter in die verriegelte Konfiguration zu versetzen, und wobei in der verriegelten Konfiguration der Leistungsschalter nicht betätigt werden kann;
wobei eine Bewegung des Türgriffs von der offenen Stellung in die geschlossene Stellung dazu ausgebildet ist, zu ermöglichen, dass der Leistungsschalter in eine entriegelte Konfiguration versetzt wird, wobei die Bewegung des Türgriffs von der offenen Stellung in die geschlossene Stellung dazu ausgebildet ist, zu ermöglichen, dass sich der Teil des Kopplungssystems zu dem Körperabschnitt des Türgriffs hin bewegt, wobei, wenn der Teil des Kopplungssystems zu dem Körperabschnitt des Türgriffs hin bewegt wird, die Verriegelung innerhalb des Leistungsschalterwagens durch das Kopplungssystem aktiviert wird, um den Leistungsschalter in die entriegelte Konfiguration zu versetzen, und wobei in der entriegelten Konfiguration der Leistungsschalter betätigt werden kann;
wobei, wenn sich der Türgriff in der geschlossenen Stellung befindet, eine Bewegung des Leistungsschalters von einer ausgefahrenen Konfiguration in eine eingefahrene Konfiguration dazu ausgebildet ist, den Türgriff in eine verriegelte Konfiguration zu versetzen, in der er gegen eine Bewegung von der geschlossenen Stellung in die offene Stellung verriegelt ist, wobei die Bewegung des Leistungsschalters von der ausgefahrenen Konfiguration in die eingefahrene Konfiguration dazu ausgebildet ist, einen Teil eines Kopplungssystems zu dem Körperabschnitt des Türgriffs hin zu bewegen, wobei, wenn der Teil des Kopplungssystems zu dem Körperabschnitt des Türgriffs hin bewegt wird, er dazu ausgebildet ist, mit dem Türgriff in Eingriff zu kommen, um den Türgriff in die verriegelte Konfiguration zu versetzen.

2. Schaltanlage nach Anspruch 1, wobei, wenn sich der Türgriff in der geschlossenen Stellung befindet, eine Bewegung des Leistungsschalters von der eingefahrenen Konfiguration in die ausgefahrene Konfiguration dazu ausgebildet ist, den Türgriff in eine entriegelte Konfiguration zu versetzen, in der er nicht gegen eine Bewegung von der geschlossenen Stellung in die offene Stellung verriegelt ist.

3. Schaltanlage nach einem der Ansprüche 1 bis 2, wobei die Schaltanlage einen Erdungsschalter und einen Erdungsschalter-Betätigungsgriff oder eine Erdungsschalter-Betätigungsstange umfasst, wobei der Erdungsschalter dazu ausgebildet ist, betätigt zu werden, wenn der Erdungsschalter-Betätigungsgriff oder die Erdungsschalter-Betätigungsstange eingesetzt ist, und wobei der Erdungsschalter dazu ausgebildet ist, nicht betätigt zu werden, wenn der Erdungsschalter-Betätigungsgriff oder die Erdungsschalter-Betätigungsstange nicht eingesetzt ist, wobei eine Bewegung des Leistungsschalters von der eingefahrenen Konfiguration in die ausgefahrene Konfiguration dazu ausgebildet ist, eine Sperre zu deaktivieren, und wobei die Deaktivierung der Sperre dazu ausgebildet ist, zu ermöglichen, dass der Erdungsschalter-Betätigungsgriff oder die Erdungsschalter-Betätigungsstange eingesetzt wird.

4. Schaltanlage nach Anspruch 3, wobei das Einsetzen des Erdungsschalter-Betätigungsgriffs oder der Erdungsschalter-Betätigungsstange dazu ausgebildet ist, den Leistungsschalter in eine verriegelte Konfiguration zu versetzen, und wobei der Leistungsschalter in der verriegelten Konfiguration nicht betätigt werden kann.

5. Schaltanlage nach einem der Ansprüche 3 bis 4, wobei eine Bewegung des Leistungsschalters von der ausgefahrenen Konfiguration in die eingefahrene Konfiguration dazu ausgebildet ist, die Sperre zu aktivieren, und wobei die Aktivierung der Sperre dazu ausgebildet ist, zu verhindern, dass der Erdungsschalter-Betätigungsgriff oder die Erdungsschalter-Betätigungsstange eingesetzt wird.

6. Schaltanlage nach Anspruch 5, wobei die Bewegung des Leistungsschalters von der ausgefahrenen Konfiguration in die eingefahrene Konfiguration dazu ausgebildet ist, den Leistungsschalter in die entriegelte Konfiguration zu versetzen.

7. Schaltanlage nach einem der Ansprüche 3 bis 6, wobei die Schaltanlage umfasst:
- ein zweites Abteil;
- eine zweite Tür; und
- einen zweiten Türgriff;
wobei die zweite Tür Zugang zum Inneren des zweiten Abteils ermöglicht;
wobei der zweite Türgriff zum Öffnen und Schließen der zweiten Tür verwendet wird;
wobei der zweite Türgriff dazu ausgebildet ist, sich von einer geschlossenen Stellung in eine offene Stellung zu bewegen;
wobei der Erdungsschalter dazu ausgebildet ist, unter Verwendung des Erdungsschalter-Betätigungsgriffs oder der Erdungsschalter-Betätigungsstange in einen eingeschalteten Zustand überführt zu werden, und der Erdungsschalter dazu ausgebildet ist, unter Verwendung des Erdungsschalter-Betätigungsgriffs oder der Erdungsschalter-Betätigungsstange in einen ausgeschalteten Zustand überführt zu werden;
wobei, wenn sich der zweite Türgriff in der geschlossenen Stellung befindet, die zweite Tür dazu ausgebildet ist, sich nicht zu öffnen, und wenn sich der zweite Türgriff in der offenen Stellung befindet, die zweite Tür dazu ausgebildet ist, sich zu öffnen; und
wobei, wenn sich der zweite Türgriff in der geschlossenen Stellung befindet, ein Übergang des Erdungsschalters von dem eingeschalteten Zustand in den ausgeschalteten Zustand dazu ausgebildet ist, den zweiten Türgriff in eine verriegelte Konfiguration zu versetzen, in der er gegen eine Bewegung von der geschlossenen Stellung in die offene Stellung verriegelt ist.

## Revendications

1. Appareillage de commutation à basse, moyenne ou haute tension, l'appareillage de commutation comprenant :
- un système de verrouillage ;
- un compartiment ;
- une porte ;
- une poignée de porte ; et
- un disjoncteur monté sur un chariot ;
la porte permettant l'accès à l'intérieur du compartiment ;
la poignée étant utilisée pour ouvrir et fermer la porte ;
le disjoncteur étant situé dans le compartiment ;
la poignée étant conçue pour se déplacer d'une position fermée à une position ouverte ; et
le système de verrouillage étant conçu de telle sorte que :
lorsque la poignée de porte est en position fermée, la porte est conçue pour ne pas s'ouvrir et lorsque la poignée de porte est en position ouverte, la porte est conçue pour s'ouvrir ;
dans lequel un déplacement de la poignée de porte de la position fermée à la position ouverte est conçu pour éloigner une partie d'un système d'accouplement d'une partie corps de la poignée de porte, et dans lequel,
lorsque la partie du système d'accouplement est éloignée de la partie corps de la poignée de porte, un verrouillage à l'intérieur du chariot à disjoncteur est désactivé par le système d'accouplement pour placer le disjoncteur dans une configuration verrouillée, et dans lequel, dans la configuration verrouillée, le disjoncteur ne peut pas être actionné ;
dans lequel un déplacement de la poignée de porte de la position ouverte à la position fermée est conçu pour permettre à la partie du système d'accouplement de se rapprocher de la partie corps de la poignée de porte, dans lequel, lorsque la partie du système d'accouplement est rapprochée de la partie corps de la poignée de porte, le verrouillage à l'intérieur du chariot à disjoncteur est activé par le système d'accouplement pour placer le disjoncteur dans une configuration déverrouillée, et dans lequel, dans la configuration déverrouillée, le disjoncteur peut être actionné ;
dans lequel lorsque la poignée de porte est en position fermée, un déplacement du disjoncteur d'une configuration débrochée à une configuration embrochée est conçu pour placer la poignée de porte dans une configuration verrouillée où elle est empêchée de se déplacer de la position fermée à la position ouverte, dans lequel le déplacement du disjoncteur de la configuration débrochée à la configuration embrochée est conçu pour déplacer une partie d'un système d'accouplement vers la partie corps de la poignée de porte, dans lequel lorsque la partie du système d'accouplement est rapprochée de la partie corps de la poignée de porte, elle est conçue pour venir en prise avec la poignée de porte afin de placer la poignée de porte dans la configuration verrouillée.

2. Appareillage de commutation selon la revendication 1, dans lequel, lorsque la poignée de porte est en position fermée, un déplacement du disjoncteur de la configuration embrochée à la configuration débrochée est conçu pour placer la poignée de porte dans une configuration déverrouillée où elle n'est pas empêchée de passer de la position fermée à la position ouverte.

3. Appareillage de commutation selon l'une quelconque des revendications 1 à 2, l'appareillage de commutation comprenant un interrupteur de mise à la terre et une poignée ou une barre d'actionnement d'interrupteur de mise à la terre, dans lequel lorsque la poignée ou la barre d'actionnement d'interrupteur de mise à la terre est insérée, l'interrupteur de mise à la terre est conçu pour fonctionner et lorsque la poignée ou la barre d'actionnement d'interrupteur de mise à la terre n'est pas insérée, l'interrupteur de mise à la terre est conçu pour ne pas fonctionner, dans lequel un déplacement du disjoncteur de la configuration embrochée à la configuration débrochée est conçu pour désactiver un verrou, et dans lequel la désactivation du verrou est conçue pour permettre l'insertion de la poignée ou de la barre d'actionnement de l'interrupteur de mise à la terre.

4. Appareil de commutation selon la revendication 3, dans lequel l'insertion de la poignée ou de la barre d'actionnement de l'interrupteur de mise à la terre est conçue pour placer le disjoncteur dans une configuration verrouillée, et dans lequel dans la configuration verrouillée, le disjoncteur ne peut pas être actionné.

5. Appareillage de commutation selon l'une quelconque des revendications 3 à 4, dans lequel un déplacement du disjoncteur de la configuration débrochée à la configuration embrochée est conçu pour activer le verrou, et dans lequel l'activation du verrou est conçue pour arrêter l'insertion de la poignée ou de la barre d'actionnement de l'interrupteur de mise à la terre.

6. Appareillage de commutation selon la revendication 5, dans lequel le déplacement du disjoncteur de la configuration débrochée à la configuration embrochée est conçu pour placer le disjoncteur dans la configuration déverrouillée.

7. Appareillage de commutation selon l'une quelconque des revendications 3 à 6, l'appareillage de commutation comprenant :
- un second compartiment ;
- une seconde porte ; et
- une seconde poignée de porte ;
la seconde porte permettant l'accès à l'intérieur du second compartiment ;
la seconde poignée étant utilisée pour ouvrir et fermer la seconde porte ;
la seconde poignée étant conçue pour se déplacer d'une position fermée à une position ouverte ;
dans lequel l'interrupteur de mise à la terre est conçu pour passer à un état de marche par l'utilisation de la poignée ou de la barre d'actionnement de l'interrupteur de mise à la terre et l'interrupteur de mise à la terre est conçu pour passer à un état d'arrêt par l'utilisation de la poignée ou de la barre d'actionnement de l'interrupteur de mise à la terre ;
dans lequel, lorsque la seconde poignée de porte est dans la position fermée, la seconde porte est conçue pour ne pas s'ouvrir et lorsque la seconde poignée de porte est dans la position ouverte, la seconde porte est conçue pour s'ouvrir ; et
dans lequel, lorsque la seconde poignée de porte est dans la position fermée, une transition de l'interrupteur de mise à la terre de l'état de marche à l'état d'arrêt est conçue pour placer la seconde poignée de porte dans une configuration verrouillée où elle est empêchée de se déplacer de la position fermée à la position ouverte.
